# FASCICULE DE BREVET EUROPEEN

(11) **EP 4 105 122 B1**
(45) Date de publication et mention de la délivrance du brevet: **02.08.2023**
(21) Numéro de dépôt: 22171273.0
(22) Date de dépôt: 03.05.2022
(51) Int. Cl.: B64C 27/22, B64C 27/26

(54) **PROCÉDÉ ET DISPOSITIF D'AIDE AU PILOTAGE D'UN GIRAVION MUNI D'AU MOINS UNE HÉLICE**
VERFAHREN UND VORRICHTUNG ZUR STEUERUNGSUNTERSTÜTZUNG EINES DREHFLÜGLERS MIT MINDESTENS EINEM PROPELLER
METHOD AND DEVICE FOR ASSISTING THE PILOTING OF A ROTORCRAFT PROVIDED WITH AT LEAST ONE PROPELLER

(30) Priorité: 17.06.2021 FR 2106451
(43) Date de publication de la demande: 21.12.2022
(73) Titulaire: Airbus Helicopters, 13725 Marignane Cedex (FR)
(72) Inventeur: ABDELLI, Kamel, 13011 MARSEILLE (FR)
(74) Mandataire: GPI Brevets

(56) Documents cités:
- FR-A1- 2 946 322
- FR-A1- 3 097 527
- US-A- 4 034 605

## Description

La présente invention concerne un procédé et un dispositif d'aide au pilotage d'un giravion muni d'au moins une hélice ainsi qu'un giravion muni d'un tel dispositif.

Plus particulièrement, l'invention se rapporte donc à un giravion ayant une voilure tournante et au moins une hélice. Dès lors, un tel giravion est dénommé « giravion à hélice » par commodité par la suite.

Un tel giravion à hélice est décrit dans le document FR 2916418.

Un giravion désigne un aéronef muni d'une voilure tournante comprenant au moins un rotor principal. Un giravion comporte traditionnellement une cellule et au moins un rotor principal entraîné en rotation par une installation motrice. Un tel rotor principal peut être qualifié de « rotor de sustentation » en raison de sa participation à la sustentation de l'aéronef, ce rotor principal pouvant aussi participer à l'avancement de l'aéronef.

Un giravion à hélice comporte de plus un ou plusieurs rotors de type hélice participant au moins partiellement à l'avancement du giravion. Dans un souci de simplification, le terme « hélice » est utilisé par la suite pour désigner une hélice d'avancement propulsive ou tractive.

En particulier, un giravion à hélice comporte une cellule, au moins un rotor principal, une ou plusieurs hélices placées éventuellement latéralement par rapport au fuselage, voire au moins une surface additionnelle de sustentation.

Cette surface additionnelle de sustentation peut comporter au moins deux ailes agencées de part et d'autre du fuselage. Le giravion à hélice peut alors comprendre au moins une hélice, voire deux hélices placées de part et d'autre du fuselage, sur les ailes par exemple.

Selon un autre aspect, une installation motrice du giravion à hélice peut comporter au moins un moteur. Ce ou ces moteurs peuvent être reliés par un système d'interconnexion mécanique à la ou aux hélices et audit au moins un rotor principal. Les vitesses de rotation de la sortie du ou des moteurs, de la ou des hélices, du rotor principal et du système d'interconnexion sont par exemple proportionnelles entre elles, le rapport de proportionnalité étant constant quelle que soit la configuration de vol du giravion à hélice en conditions normales de fonctionnement. Par conséquent, le rotor principal demeure avantageusement constamment entraîné en rotation par le ou les moteurs dans des configurations normales de vol.

Pour piloter un giravion à hélice, une composante de pas collectif et une composante de pas cyclique du pas des pales du rotor principal peuvent être pilotées.

Par ailleurs, un giravion à hélice peut comprendre au moins une chaîne mécanique pour piloter collectivement le pas des pales de la ou des hélices afin de contrôler chaque hélice. La ou les hélices peuvent ainsi agir sur la vitesse d'avancement du giravion à hélice.

Notamment sur un giravion à au moins deux hélices situées de part et d'autre d'une cellule, le pas des pales de chaque hélice peut être fonction d'une composante de pas moyen et d'une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas alors que la composante de pas différentiel peut être égale à la demi-différence des premier et deuxième pas. Dès lors, des fonctions de contrôle de direction notamment en lacet peuvent être réalisées par l'utilisation d'une commande de lacet apte à modifier la valeur de la composante de pas différentiel. Par exemple, une telle commande de lacet peut comprendre un palonnier relié par un système de commande à architecture mécanique et/ou électrique aux hélices. Le palonnier permet de modifier la valeur de la composante de pas différentiel. Par ailleurs, le giravion à hélice inclut au moins une commande de poussée apte à modifier la valeur de la composante de pas moyen, via le système de commande.

Indépendamment du nombre d'hélice(s), un pilote doit prendre en considération diverses limites.

En particulier, la puissance développée par l'installation motrice est notamment répartie entre la ou les hélices et le rotor principal. Le pilote doit piloter la ou les hélices en s'assurant que le rotor principal reçoive toujours une puissance motrice suffisante.

En outre, le pilote doit commander le rotor principal et la ou les hélices de manière à respecter les limites structurelles du système d'interconnexion.

Par ailleurs, les pales de la ou des hélices ne doivent pas subir un décrochage aérodynamique.

Sur un hélicoptère, le pilote contrôle la composante de pas cyclique des pales du rotor principal pour obtenir une assiette à piquer afin de piloter la vitesse d'avancement de l'aéronef. De plus, la composante de pas collectif des pales du rotor principal est augmentée pour maintenir l'aéronef à une même altitude. La gestion de la vitesse d'avancement requiert ainsi une gestion de la puissance fournie au rotor pour conserver une altitude constante.

Sur un giravion à hélice, le vol d'avancement peut être réalisé selon un mode de fonctionnement « hélicoptère » mais aussi dans un mode de fonctionnement « avion ». Dans ce mode de fonctionnement « avion » et à partir d'une certaine vitesse d'avancement, une partie de la portance verticale est fournie par la voilure tournante et une autre partie de la portance par les ailes. La composante de pas collectif des pales de la voilure tournante est alors baissée puisque la voilure tournante est assistée par les ailes, la voilure tournante prélevant moins de puissance sur l'installation motrice. De plus, le pas des pales de la ou des hélices est au contraire augmenté pour obtenir la vitesse d'avancement voulue, la ou les hélices prélevant alors plus de puissance sur l'installation motrice. Un pilote doit donc gérer précautionneusement l'augmentation du pas des hélices pour que la voilure tournante reçoive suffisamment de puissance. La gestion de la vitesse d'avancement s'accompagne donc aussi d'une gestion de la puissance fournie par l'installation motrice.

Pour aider un pilote, un enseignement consiste alors à réaliser un indicateur muni d'une échelle de vitesse air présentant la vitesse d'avancement de l'aéronef et d'une échelle de puissance. L'échelle de vitesse air et l'échelle de puissance sont indépendantes puisqu'elles n'ont pas trait aux mêmes paramètres.

Un tel indicateur impose de surveiller diverses échelles de mesure et de bien appréhender les données affichées.

Le brevet FR 2 946 322 A1 décrit un dispositif d'aide au pilotage d'un hélicoptère hybride muni d'une voilure tournante, de deux demi-ailes pourvues respectivement d'une première et d'une deuxième hélices, et d'une installation motrice entraînant en permanence en rotation ladite voilure tournante et lesdites hélices en engrenant un système mécanique d'interconnexion. De plus, ce dispositif est pourvu d'un moyen de calcul pour déterminer un pas moyen maximal applicable auxdites première et deuxième hélices sans excéder la puissance disponible pour lesdites hélices, ledit moyen de calcul déterminant ledit pas moyen maximal (βmax) en fonction du pas moyen actuel des pales des première et deuxième hélices mesuré en temps réel, d'une puissance maximale apte à être délivrée par ladite installation motrice, d'une puissance actuelle délivrée par cette installation motrice et d'une première relation déterminant un gradient de puissance en fonction du pas desdites première et deuxième hélices.

Le document US 4514142 présente un aéronef muni d'une installation motrice, d'un rotor principal ainsi que d'un propulseur arrière agencé à l'arrière d'une poutre de queue. Selon ce document, un générateur génère un premier signal, sous la forme d'une tension, qui est transmis à un moyen fournissant un deuxième signal porteur d'une puissance disponible pour le propulseur. Un afficheur peut afficher l'évolution en fonction du temps de cette puissance disponible pour le propulseur arrière.

Le brevet FR2756256 présente un indicateur affichant la marge de puissance disponible pour un turbomoteur d'hélicoptère sur un indicateur gradué en degrés de pas collectif des pales du rotor principal.

Le document FR 3 097 527 présente un indicateur pour un giravion hybride muni d'au moins une hélice et d'une voilure tournante.

Le document US 4 034 605 décrit un indicateur déplaçant un marqueur par rapport à un fond contenant des courbes de puissance en fonction de la vitesse air.

Néanmoins, cet enseignement ne permet pas de réaliser un dispositif d'aide au pilotage d'un giravion à hélice possédant non seulement un rotor principal mais aussi au moins une hélice liée au rotor principal par un système d'interconnexion. En effet, la spécificité d'un giravion à hélice implique qu'un ordre donné au rotor principal a des conséquences sur la ou les hélices, et inversement, par suite cet état de la technique ne peut lui être appliqué.

De même, le document FR 2 854 128 A1 décrit un indicateur de pilotage pour un aéronef, en particulier un avion de transport. L'indicateur de pilotage présente, sur un afficheur, un cadran qui est gradué en pourcentage, dont le maximum représente la poussée maximale disponible pour la phase de vol actuelle, dans la configuration actuelle de l'aéronef et pour les conditions anémométriques actuelles. Le cadran est muni de signes caractéristiques dont les représentent respectivement les poussées commandées et effectives qui sont exprimées en pourcentage de la poussée maximale.

La présente invention a alors pour objet de proposer un procédé d'aide au pilotage alternatif permettant de faciliter le pilotage d'un giravion à hélice afin d'optimiser les performances du giravion à hélice en garantissant sa sécurité.

L'invention vise ainsi un procédé d'aide au pilotage d'un giravion à hélice, ledit giravion à hélice ayant une installation motrice reliée par un système mécanique à une voilure tournante et à au moins une hélice.

Le procédé comporte les étapes suivantes :
- affichage sur commande d'un calculateur et sur un afficheur d'un repère de puissance minimale et d'un repère de puissance maximale sur une première échelle, ladite première échelle étant une image d'une puissance consommée par ladite au moins une hélice, le repère de puissance minimale étant une image d'une puissance minimale consommable par ladite au moins une hélice, le repère de puissance maximale étant une image d'une puissance maximale consommable par ladite au moins une hélice, ledit calculateur déterminant où placer le repère de puissance minimale et le repère de puissance maximale sur la première échelle,
- affichage sur commande du calculateur et sur l'afficheur d'une deuxième échelle graduée en vitesse d'avancement du giravion à hélice,
- affichage sur commande du calculateur et sur l'afficheur d'un index comprenant un tronçon de puissance image d'une puissance courante consommée par ladite au moins une hélice, ledit index comprenant un tronçon de vitesse désignant une vitesse d'avancement courante sur ladite deuxième échelle, ledit index et ladite première échelle étant mobiles l'un par rapport à l'autre, ledit index et ladite deuxième échelle étant mobiles l'un par rapport à l'autre, ledit calculateur déterminant où placer l'index,
- affichage sur l'afficheur et sur commande dudit calculateur d'un repère de poussée nulle porteur d'une poussée d'avancement nulle exercée par ladite au moins une hélice.

Le terme « graduée » utilisé précédemment et par la suite signifie que l'échelle associée s'exprime dans l'unité concernée. Ainsi, la deuxième échelle est exprimée en vitesse d'avancement, par exemple en vitesse air. Les échelles concernées peuvent présenter des graduations ou ne pas présenter des graduations.

L'expression « puissance courante consommée par ladite au moins une hélice » fait référence à la puissance consommée conjointement par la ou les hélices et de fait susceptible d'avoir un impact sur la puissance fournie à la voilure tournante. L'expression « la ou les hélices » fait référence à la seule hélice en présence d'une unique hélice ou à toutes les hélices en présence de plusieurs hélices. La position du tronçon de puissance par rapport à la première échelle est une image de la puissance courante, en étant porteur de cette puissance courante ou en représentant la position d'une interface pilotant cette puissance courante.

Dès lors, un unique index pointe à la fois la première échelle illustrant la puissance consommée par la ou les hélices et la deuxième échelle illustrant la vitesse d'avancement du giravion à hélice.

Par suite, l'afficheur représente un indicateur présentant, de manière simple et lisible, sur la première échelle un paramètre image de la puissance consommée par la ou les hélices et sur la deuxième échelle la vitesse d'avancement courante du giravion.

Les informations affichées ainsi sur l'afficheur permettent à un pilote d'évaluer, facilement et rapidement, la puissance consommée par la ou les hélices pour ne pas dépasser une limite de puissance lorsque le pilote modifie le pas moyen des pales de la ou des hélices pour modifier la vitesse d'avancement du giravion.

Quel que soit le nombre d'hélice, l'expression « pas moyen » désigne la composante du pas des pales de la ou des hélices agissant sur l'avancement du giravion, et « pas différentiel » désigne la composante du pas des pales de la ou des hélices agissant le cas échéant sur le mouvement de lacet. Sur un giravion à deux hélices agencées de part et d'autre de la cellule, le pas moyen peut être égal à la demi-somme des pas des pales des hélices, et le pas différentiel peut être égal à la demi-différence des pas des pales des hélices. Sur un giravion ayant une ou des hélices ne participant pas au contrôle du mouvement en lacet, le pas différentiel peut être nul.

Ainsi, le dispositif d'aide au pilotage permet à un pilote d'augmenter ou de baisser le pas des pales de la ou des hélices en sécurité.

Le dispositif d'aide au pilotage peut de plus comporter une ou plusieurs des caractéristiques qui suivent.

Selon une possibilité, la première échelle peut être fixe, le procédé peut comporter, sur commande dudit calculateur, un affichage sur l'afficheur dudit index par rapport à la première échelle, un affichage sur l'afficheur du repère de puissance minimale et du repère de puissance maximale par rapport à l'index ainsi qu'un ajustement de la deuxième échelle afin que ledit index désigne la vitesse d'avancement courante.

L'index est indéformable, à savoir qu'il présente toujours la même forme. Il en va de même pour la première échelle. Le calculateur évalue alors la position que doit atteindre l'index sur la première échelle, puis ajuste les positions du repère de puissance minimale et du repère de puissance maximale par rapport à l'index. De plus, le calculateur ajuste la deuxième échelle pour faire correspondre la vitesse d'avancement courante à l'index.

Le calculateur peut déplacer la deuxième échelle par rapport à l'index et/ou peut compresser et/ou dilater localement la deuxième échelle pour que l'index pointe la vitesse d'avancement courante du giravion sur la deuxième échelle.

Selon une première variante, la première échelle peut être graduée en positions d'une interface pilotant un pas moyen de chaque pale de la ou des hélices.

L'interface commande le pas moyen des pales de la ou des hélices, ce pas moyen ayant de fait un impact sur la puissance consommée par la ou les hélices. Dès lors, la position courante de l'interface est une image de la puissance courante consommée par la ou les hélices.

Dès lors, le procédé peut comporter une mesure, avec un senseur de position, d'une position courante de l'interface pilotant un pas moyen de chaque pale de ladite au moins une hélice, ladite interface étant mobile entre une première position et une deuxième position illustrées par des extrémités de la première échelle, ladite première échelle étant graduée en positions de ladite interface, ledit procédé comportant les étapes suivantes :
- détermination avec le calculateur de la puissance maximale, de la puissance minimale et de la puissance courante, le calculateur recevant éventuellement des signaux de senseurs adéquats à cet effet,
- affichage sur l'afficheur commandé par le calculateur dudit index en fonction de ladite position courante,
- affichage sur l'afficheur commandé par le calculateur dudit repère de puissance maximale par rapport à l'index en fonction d'une première différence entre la puissance courante et la puissance maximale,
- affichage sur l'afficheur commandé par le calculateur dudit repère de puissance minimale par rapport à l'index en fonction d'une deuxième différence entre la puissance courante et la puissance minimale.

Eventuellement, le procédé comporte une conversion avec ledit calculateur de ladite première différence et de la deuxième différence en une première et une deuxième marges de pas respectives à l'aide d'une loi de pas fournissant une marge de pas à partir d'une marge de puissance et d'un gradient de puissance en fonction du pas, ledit procédé comportant une conversion avec ledit calculateur à l'aide d'une loi de conversion de ladite première marge de pas et de ladite deuxième marge de pas en une première distance séparant l'index du repère de puissance maximale et une deuxième distance séparant l'index du repère de puissance minimale.

L'enseignement du brevet FR2 946 322 est applicable, ce brevet présentant une telle loi de pas.

La loi de conversion et la loi de pas peuvent être établies par essais, calculs et/ou simulations.

Le terme « loi » désigne tout moyen permettant d'effectuer les calculs concernés, tel que des tableaux de valeurs, des équations, des abaques mémorisés...

Selon une deuxième variante, la première échelle peut être une échelle de puissance en tant que telle.

Le procédé peut alors comporter les étapes suivantes:
- détermination avec le calculateur de la puissance maximale, de la puissance minimale et de la puissance courante,
- positionnement avec le calculateur dudit index ainsi que du repère de puissance minimale et du repère de puissance maximale par rapport à la première échelle en fonction de la puissance courante ainsi que de la puissance minimale et de la puissance maximale, ladite première échelle étant graduée en puissance.

Quelle que soit la variante, la détermination avec le calculateur de la puissance maximale peut comporter les étapes suivantes :
- détermination avec le calculateur d'une puissance disponible pouvant être fournie par l'installation motrice, un senseur de puissance moteur transmettant un signal de puissance moteur au calculateur porteur de la puissance disponible,

- détermination avec le calculateur d'une puissance rotor consommée par la voilure tournante, un senseur de puissance rotor transmettant un signal de puissance rotor au calculateur porteur de la puissance rotor,
- détermination avec le calculateur d'une différence entre la puissance disponible et la puissance rotor.

Eventuellement, la puissance maximale est égale à la différence entre la puissance disponible et la puissance rotor. Éventuellement la puissance disponible PDISPO est établie en fonction de pertes d'installation et la puissance consommée par d'autres organes (alternateur, pompe...) que la voilure tournante et la ou les hélices, mesurée par exemple par des senseurs dédiés de manière usuelle, ou ces pertes d'installations et puissances sont négligées.

Alternativement et notamment en cas de surdimensionnement de l'installation motrice, la détermination avec le calculateur de la puissance maximale peut comporter la détermination avec le calculateur d'une puissance limite du système mécanique, la puissance maximale étant égale au minimum entre la puissance limite et la différence entre la puissance disponible et la puissance rotor.

Cette puissance limite peut être fixe et mémorisée dans le calculateur.

Alternativement, ledit dispositif d'aide au pilotage peut comporter un senseur de vitesse d'hélice transmettant au calculateur un signal de vitesse porteur d'une vitesse de rotation de ladite au moins une hélice, ladite puissance limite étant égale au produit d'un couple prédéterminé et de ladite vitesse de rotation.

De la même manière, la puissance minimale peut être soit une constante soit égale au produit du couple prédéterminé et d'une vitesse de rotation. Cette vitesse de rotation peut alors être mesurée par un senseur de vitesse d'hélice transmettant au calculateur un signal de vitesse porteur de la vitesse de rotation directement ou à un coefficient de proportionnalité près. Par exemple, la vitesse de rotation est égale au produit d'un coefficient prédéterminé et d'une vitesse de rotation courante de la voilure tournante ou d'un autre organe de l'installation mobile en rotation conjointement avec une hélice.

Selon une possibilité compatible avec les possibilités précédentes, le tronçon de puissance peut comporter une forme complémentaire à une forme du repère de puissance minimale et une forme du repère de puissance maximale.

L'expression « forme complémentaire » signifie qu'une forme pénètre parfaitement dans l'autre forme.

Ainsi, un pilote peut aisément détecter si un seuil de puissance est atteint.

Favorablement, le tronçon de puissance peut comporter une forme de losange creux, ledit repère de puissance maximale ayant deux faces supérieures conformées à deux faces dudit losange et ledit repère de puissance minimale ayant deux faces inférieures conformées à deux autres faces dudit losange.

Selon une possibilité compatible avec les possibilités précédentes, ledit tronçon de vitesse peut entourer une valeur de la vitesse d'avancement courante.

Ainsi, un pilote peut aisément visualiser la vitesse d'avancement courante.

Selon une possibilité compatible avec les possibilités précédentes, la première échelle et ladite deuxième échelle sont parallèles entre elles.

Cet agencement permet de bien visualiser les données affichées.

Selon une possibilité compatible avec les possibilités précédentes, le procédé peut comporter l'affichage sur l'afficheur sur commande du calculateur par rapport à la première échelle d'un repère de portance maximale porteur d'un coefficient de portance maximale de ladite au moins une hélice ainsi que d'un repère de portance minimale porteur d'un coefficient de portance minimale de ladite au moins une hélice, ledit index pouvant comporter un tronçon de portance ayant une forme complémentaire aux formes du repère de portance minimale et du repère de portance maximale.

Le coefficient de portance maximale et le coefficient de portance minimale d'une pale d'une hélice sont associés respectivement à deux incidences particulières de cette pale. Le calculateur positionne le repère de portance maximale et le repère de portance minimale par rapport à la première échelle à des positions engendrant le placement des pales de l'hélice respectivement à ces deux incidences particulières.

En présence de plusieurs hélices, les repères de portance minimale et de portance maximale peuvent être pilotés par l'incidence des pales d'une des hélices par exemple. Eventuellement, le repère de portance maximale est piloté par l'hélice ayant la plus petite marge par rapport à son coefficient de portance maximale et le repère de portance minimale est piloté par l'hélice ayant la plus petite marge par rapport à son coefficient de portance minimale.

Ainsi, lorsque l'index est agencé entre les repères de portance maximale et minimale, les hélices fonctionnement normalement.

Selon une possibilité compatible avec les précédentes, la deuxième échelle peut séparer un premier côté et un deuxième côté, le repère de portance maximale et le repère de portance minimale sont situés du premier côté, le repère de puissance maximale et le repère de puissance minimale étant situés sur la première échelle, du deuxième côté.

Les informations affichées sont ainsi parfaitement lisibles.

Selon une possibilité compatible avec les précédentes, ledit procédé comporte la détermination avec le calculateur de positions du repère de portance maximale et du repère de portance minimale au regard de la première échelle en fonction d'une loi de placement fournissant la position du repère de portance maximale au sein de la première échelle en fonction du coefficient de portance maximale et la position du repère de portance minimale au sein de la première échelle en fonction du coefficient de portance minimale.

A cet effet, la loi de placement peut être établie par essais, simulations et/ou calculs par exemple.

L'incidence des pales d'une hélice, et donc les positions des repères de portance minimale et maximale, dépendent notamment du pas des pales, de la vitesse de rotation de l'hélice et du vecteur vitesse air de l'aéronef.

La loi de placement peut alors être fonction de la vitesse d'avancement du giravion mesurée avec le senseur de vitesse d'avancement et/ou d'une vitesse verticale du giravion, et/ou d'une vitesse de rotation d'une hélice mesurée avec le senseur de vitesse d'hélice, et/ou d'une incidence du giravion mesurée avec un senseur d'incidence. Selon un exemple, la loi de placement fournit une distance entre le repère de portance concerné et l'index en fonction d'une part d'une différence entre l'incidence courante et l'incidence mémorisée associée au coefficient de portance concerné et, d'autre part d'une formule prédéterminée transformant cette différence en une marge de puissance selon la deuxième variante ou en une marge de position de l'interface commande selon la première variante.

Selon un autre exemple, la loi de placement fournit une distance entre le repère de portance concerné et l'index en fonction d'une part d'une différence entre le coefficient de portance courant associé à l'incidence courante et le coefficient de portance limite concerné et, d'autre part, une formule prédéterminée transformant cette différence en une marge de puissance selon la deuxième variante ou une marge de position de l'interface commande selon la première variante.

Selon une possibilité compatible avec les précédentes, ledit procédé comporte les étapes suivantes :
- calcul avec ledit calculateur d'une vitesse d'avancement maximale pour une position de l'index sur le repère de portance maximale ou le repère de puissance maximale le plus proche de l'index et affichage sur l'afficheur de cette vitesse d'avancement maximale,
- calcul avec ledit calculateur d'une vitesse d'avancement minimale pour une position de l'index sur le repère de portance minimale ou le repère de puissance minimale le plus proche de l'index et affichage sur l'afficheur de cette vitesse d'avancement minimale,
- ajustement avec ledit calculateur de la deuxième échelle en fonction de la vitesse d'avancement courante, de la vitesse d'avancement minimale et de la vitesse d'avancement maximale.

Le calculateur calcule donc, pour la limite basse la plus proche et la limite haute la plus proche, les vitesses d'avancement pour lesquelles ces limites peuvent être atteintes.

A cet effet, le calculateur mémorise deux lois de vitesse fournissant la vitesse maximale respectivement en fonction par exemple du coefficient de portance maximale et de la puissance maximale, et deux lois de vitesse fournissant la vitesse minimale respectivement en fonction du coefficient de portance minimale et de la puissance minimale. Ces lois de vitesses peuvent être établies par essais, simulations et/ou calculs.

Le procédé tel que revendiqué comporte un affichage sur l'afficheur et sur commande dudit calculateur d'un repère de poussée nulle porteur d'une poussée d'avancement nulle exercée par ladite au moins une hélice.

Le calculateur peut mémoriser la puissance à laquelle la ou les hélices exercent conjointement une poussée n'ayant aucun impact sur l'avancement du giravion. Le calculateur place alors le repère de poussée nulle à l'endroit correspondant au sein de la première échelle. Le repère de poussée nulle peut aussi s'étendre sur la première échelle voire au niveau le cas échéant du tronçon de portance.

Le calculateur peut comprendre une formule fournissant un pas moyen des pales de la ou les hélices induisant la poussée d'avancement nulle. Le brevet FR 2946315 présente une telle formule pour un giravion à deux hélices.

Selon la première variante, le calculateur peut convertir à l'aide de la loi de conversion ce pas moyen de poussée nulle en position de l'interface. Selon la deuxième variante, le calculateur peut convertir ce pas moyen de poussée nulle en puissance.

Eventuellement, ledit repère de poussée nulle peut comporter une forme complémentaire à une forme du tronçon de puissance.

Eventuellement, ledit repère de poussée nulle peut avoir une forme de losange pouvant être inscrit dans un losange creux du tronçon de puissance.

L'invention vise aussi un dispositif d'aide au pilotage d'un giravion à hélice, ledit giravion à hélice ayant une installation motrice reliée par un système mécanique à une voilure tournante et à au moins une hélice. Le dispositif d'aide au pilotage comporte un calculateur et un afficheur configurés pour appliquer le procédé décrit précédemment, le calculateur étant configuré pour :
- piloter l'afficheur pour afficher un repère de puissance minimale et un repère de puissance maximale sur une première échelle, ladite première échelle étant une image d'une puissance consommée par ladite au moins une hélice, le repère de puissance minimale étant une image d'une puissance minimale consommable par ladite au moins une hélice, le repère de puissance maximale étant une image d'une puissance maximale consommable par ladite au moins une hélice,
- piloter l'afficheur pour afficher une deuxième échelle graduée en vitesse d'avancement du giravion à hélice,
- piloter l'afficheur pour afficher un index comprenant un tronçon de puissance image d'une puissance courante consommée par ladite au moins une hélice, ledit index comprenant un tronçon de vitesse désignant une vitesse d'avancement courante sur ladite deuxième échelle, ledit index et ladite première échelle étant mobiles l'un par rapport à l'autre, ledit index et ladite deuxième échelle étant mobiles l'un par rapport à l'autre,
- piloter l'afficheur pour afficher un repère de poussée nulle porteur d'une poussée d'avancement nulle exercée par ladite au moins une hélice .

Le dispositif d'aide au pilotage peut comporter au moins un des organes suivants : un senseur de position émettant un signal porteur d'une position courante d'une interface pilotant un pas moyen des pales de ladite au moins une hélice, un senseur de vitesse d'avancement émettant un signal porteur d'une vitesse d'avancement courante du giravion vers le calculateur, un senseur de puissance d'hélice émettant vers le calculateur un signal porteur d'une puissance consommée par ladite au moins une hélice, un senseur de puissance rotor émettant vers le calculateur un signal porteur d'une puissance consommée par ladite voilure tournante, un senseur d'incidence émettant vers le calculateur un signal porteur d'une incidence du giravion, un senseur de puissance moteur émettant vers le calculateur un signal porteur d'une puissance consommée par l'installation motrice et un calculateur moteur émettant vers le calculateur un signal porteur d'une puissance disponible.

Le calculateur peut être configuré pour déterminer une position de l'index par rapport à la première échelle et les positions du repère de puissance minimale et du repère de puissance maximale par rapport à l'index ainsi qu'un ajustement de la deuxième échelle afin que ledit index désigne la vitesse d'avancement courante.

Selon la première variante, le calculateur peut être configuré pour déterminer la puissance maximale, la puissance minimale et la puissance courante, pour déterminer la position de l'index par rapport à la première échelle en fonction de ladite position courante, pour déterminer la position dudit repère de puissance maximale par rapport à l'index en fonction d'une première différence entre la puissance courante et la puissance maximale, et pour déterminer la position dudit repère de puissance minimale par rapport à l'index en fonction d'une deuxième différence entre la puissance courante et la puissance minimale.

Le calculateur peut être configuré pour convertir la première différence et la deuxième différence en une première et une deuxième marges respectives de pas moyen des pales de la ou des hélices à l'aide d'une loi de pas fournissant une marge de pas à partir d'une marge de puissance et d'un gradient de puissance en fonction du pas, et pour convertir à l'aide d'une loi de conversion ladite première marge de pas et de ladite deuxième marge de pas en une première distance séparant l'index du repère de puissance maximale et une deuxième distance séparant l'index du repère de puissance minimale.

Selon la deuxième variante, le calculateur peut être configuré pour déterminer la puissance maximale, la puissance minimale et la puissance courante, et pour positionner l'index ainsi que le repère de puissance minimale et le repère de puissance maximale par rapport à la première échelle en fonction de la puissance courante ainsi que de la puissance minimale et de la puissance maximale, ladite première échelle étant graduée en puissance.

Quelle que soit la variante, le calculateur peut être configuré pour déterminer une puissance disponible, une puissance rotor consommée par la voilure tournante et une différence entre la puissance disponible et la puissance rotor.

La puissance maximale peut être égale à la différence entre la puissance disponible et la puissance rotor ou au minimum entre une puissance limite et la différence entre la puissance disponible et la puissance rotor.

Le calculateur peut être configuré pour afficher par rapport à la première échelle un repère de portance maximale porteur du coefficient de portance maximale de ladite au moins une hélice ainsi qu'un repère de portance minimale porteur du coefficient de portance minimale de ladite au moins une hélice, ledit index comportant un tronçon de portance ayant une forme complémentaire à une forme du repère de portance minimale et à une forme du repère de portance maximale.

Le calculateur peut être configuré pour déterminer des positions du repère de portance maximale et du repère de portance minimale au regard de la première échelle en fonction d'une loi de placement fournissant la position du repère de portance maximale au sein de la première échelle en fonction du coefficient de portance maximale et la position du repère de portance minimale au sein de la première échelle en fonction du coefficient de portance minimale.

Le calculateur peut être configuré pour déterminer une vitesse d'avancement maximale pour une position de l'index sur le repère de portance maximale ou le repère de puissance maximale le plus proche de l'index, pour afficher sur l'afficheur cette vitesse d'avancement maximale, pour déterminer une vitesse d'avancement minimale pour une position de l'index sur le repère de portance minimale ou le repère de puissance minimale le plus proche de l'index, pour afficher sur l'afficheur cette vitesse d'avancement minimale, et pour ajuster la deuxième échelle en fonction de la vitesse d'avancement courante, de la vitesse d'avancement minimale et de la vitesse d'avancement maximale.

Le calculateur est configuré pour déterminer une position sur l'afficheur d'un repère de poussée nulle porteur d'une poussée d'avancement nulle exercée par ladite au moins une hélice, et pour afficher ce repère.

L'invention vise aussi un giravion à hélice muni d'un tel dispositif d'aide au pilotage, ledit giravion à hélice ayant une installation motrice reliée par un système mécanique à une voilure tournante et à au moins une hélice.

L'invention et ses avantages apparaîtront avec plus de détails dans le cadre de la description qui suit avec des exemples donnés à titre illustratif en référence aux figures annexées qui représentent :
la figure 1, une vue en perspective d'un exemple de giravion à hélice selon l'invention,
la figure 2, un schéma présentant une installation motrice d'un giravion à hélice selon l'invention,
la figure 3, un schéma illustrant un dispositif d'aide au pilotage,
la figure 4, un schéma illustrant un dispositif d'aide au pilotage,
la figure 5, un schéma illustrant un dispositif d'aide au pilotage,
la figure 6, un schéma illustrant un dispositif d'aide au pilotage, et
la figure 7, un schéma illustrant un dispositif d'aide au pilotage.

Les éléments présents dans plusieurs figures distinctes sont affectés d'une seule et même référence.

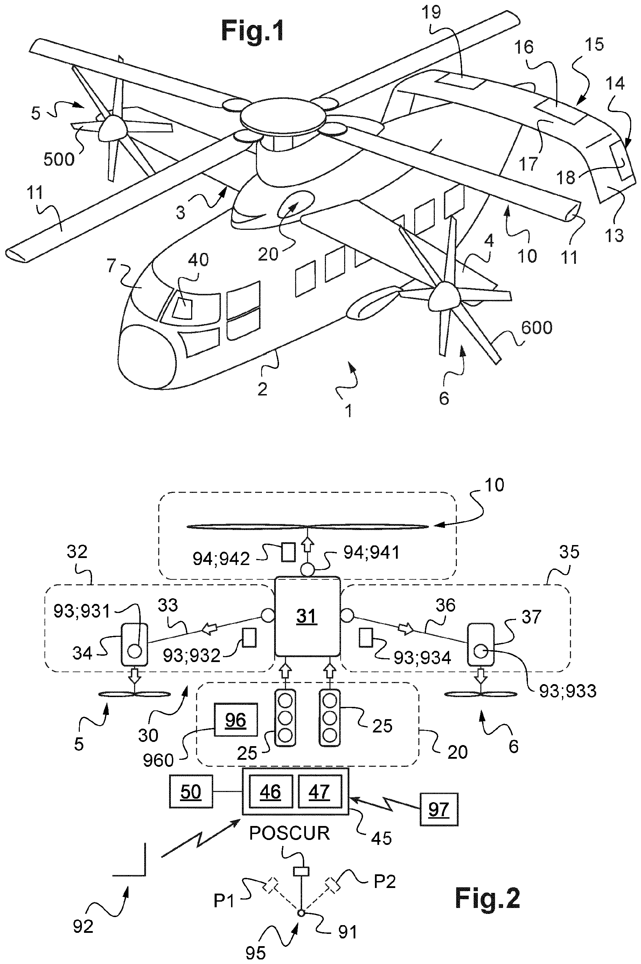

La figure 1 présente un giravion 1 à hélice selon l'invention.

Le giravion 1 à hélice comprend un fuselage 2, à l'avant duquel peut être prévu un poste de pilotage 7. Le giravion 1 à hélice est en outre muni d'une voilure tournante 10 comportant des pales 11.

De plus, le giravion 1 à hélice comporte au moins une hélice 5, 6 munie de pales 500, 600, disposée latéralement par rapport au fuselage 2 et/ou à l'arrière du fuselage 2 par exemple. Chaque hélice 5, 6 peut être portée par un support 3, 4. Le terme « chaque » est utilisé indépendamment du nombre d'hélice, à savoir aussi bien en présence d'une unique hélice qu'en présence de plusieurs hélices. Un tel support peut comprendre au moins une aile 3, 4 solidaire du fuselage 2. Selon l'exemple de la figure 1, le giravion 1 à hélice comporte deux hélices 5, 6 portées respectivement par deux ailes 3, 4 de part et d'autre du fuselage 2.

Par ailleurs, il est éventuellement prévu, au voisinage de l'extrémité arrière du fuselage 2, des surfaces de stabilisation et de manoeuvre à savoir pour la profondeur, au moins un empennage 15 avec par exemple au moins une gouverne de profondeur mobile 16, 19 par rapport à une partie avant 17 et pour la direction au moins un organe de dérive 14. Les organes de dérive 14 peuvent être constitués d'une partie avant fixe 13 avec en arrière une partie mobile 18.

Pour mettre en rotation la voilure tournante 10 et la ou les hélices 5, 6, le giravion 1 à hélice comporte une installation motrice 20.

En référence à la figure 2, l'installation motrice 20 comporte au moins un moteur 25 relié à la voilure tournante 10 et à la ou aux hélices 5, 6 par un système mécanique 30. Le système mécanique 30 peut être un système d'interconnexion connectant entre eux la voilure tournante et la ou les hélices.

Eventuellement, les vitesses de rotation des sorties des moteurs 25, de la ou des hélices 5,6, de voilure tournante 10 et des organes de transmission de puissance du système mécanique 30 sont proportionnelles entre elles en vol au moins en palier.

Le système mécanique 30 peut par exemple comprendre une boite de transmission de puissance principale 31 reliée au ou aux moteurs 25. De plus, la boite de transmission principale 31 est reliée à chaque hélice 5, 6 par une ligne de transmission de puissance 32, 35. Selon l'exemple illustré, chaque ligne de transmission de puissance 32, 35 comporte au moins un ou plusieurs arbres 33, 36 liant la boîte de transmission de puissance 31 à une boîte de transmission latérale 34, 37 débouchant sur une hélice 5, 6.

Pour contrôler l'avancement du giravion 1 à hélice, le pilote dispose d'une interface 95 liée à la ou aux hélices 5,6 par une chaîne de commande permettant de modifier collectivement et de la même manière le pas moyen des pales 500, 600 de chaque hélice 5, 6.

Plus précisément, l'interface 95 agit de manière identique sur les pas des pales de la ou les hélices 5, 6 afin d'obtenir une variation collective de ces pas. Par exemple, le pilote va requérir une augmentation de 5° du pas de l'ensemble des pales 500, 600 des hélices 5, 6 pour augmenter la poussée résultante générée par les hélices 5, 6. En particulier, l'interface 95 agit sur une composante de pas moyen du pas des pales 500, 600 de la ou des hélices 5, 6 disposées de part et d'autre du fuselage. En présence de deux hélices 5, 6, le pas moyen est égal à la moitié de la somme du pas des pales de la première hélice 5 et du pas des pales de la deuxième hélice 6.

Cette interface 95 peut en outre être déplacée, par exemple par rapport à un support, d'une première position POS1 à une deuxième POS2 illustrées en pointillés. Dans la première position POS1, l'interface 95 positionne le pas de la ou des hélices 5, 6 à un pas minimal, par exemple négatif par rapport à une référence. Dans la deuxième position POS2, l'interface 95 positionne le pas de la ou des hélices 5, 6 à un pas maximal, positif par rapport à la référence. A chaque instant, l'interface 95 est dans une position courante POSCUR engendrant une consommation de puissance par la ou les hélices 5, 6 égale une puissance courante PCUR.

Pour contrôler l'attitude en lacet du giravion 1 à hélice, le pilote dispose d'un dispositif de commande en lacet muni d'un moyen de commande en lacet, classiquement un palonnier, par exemple pour engendrer une variation différentielle des pas des pales 500, 600 des hélices 5, 6 en présence de deux hélices 5, 6 disposées de part et d'autre du fuselage.

Enfin, le giravion 1 à hélice est muni de moyens de commande usuels pour contrôler collectivement et cycliquement le pas des pales 11 de la voilure tournante.

Afin d'éviter d'être confronté à des manoeuvres susceptibles de mettre en péril le giravion 1 à hélice, ce giravion 1 à hélice est muni d'un dispositif 40 d'aide au pilotage.

Le dispositif 40 d'aide au pilotage comporte un calculateur 45 pilotant un afficheur 50. Un tel afficheur 50 peut être un écran ou une surface illuminée par un projecteur par exemple.

Le calculateur 45 peut comprendre une ou plusieurs unités, éventuellement distante, ayant chacune par exemple au moins un processeur 46 et au moins une mémoire 47, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Eventuellement, le calculateur 45 comporte une unité déterminant les valeurs de divers paramètres et une unité pilotant l'afficheur 50.

Le calculateur 45 peut comprendre une unité intégrée à l'afficheur ou distante de cet afficheur. Le calculateur 45 peut être dédié au procédé de l'invention ou peut aussi appliquer d'autres fonctions.

Selon le procédé de l'invention, le calculateur 45 est alors configuré pour transmettre un signal de commande à l'afficheur 50 pour afficher les informations requises.

A cet effet, le calculateur 45 peut recevoir au moins un signal de position transmis par un senseur 91 de position. Le senseur 91 de position émet un signal analogique ou numérique, et électrique ou optique vers le calculateur 45 porteur d'une position courante POSCUR de l'interface 95 mobile. Par exemple, un tel senseur 91 de position peut comprendre un potentiomètre, cet exemple étant donné à titre illustratif uniquement.

Le calculateur 45 peut recevoir au moins un signal de vitesse transmis par un senseur 92 de vitesse d'avancement du giravion 1 à hélice. Le senseur 92 de vitesse d'avancement émet un signal analogique ou numérique, et électrique ou optique vers le calculateur 45 porteur d'une vitesse d'avancement courante VCUR du giravion 1 à hélice, et par exemple d'une vitesse air ou une vitesse par rapport au sol. Par exemple, un tel senseur 92 de vitesse d'avancement peut comprendre un système à tube de Pitot ou un récepteur d'un système de positionnement par satellites, ces exemples étant donnés à titre illustratif uniquement.

Le calculateur 45 peut recevoir au moins un signal de puissance d'hélice transmis par un senseur 93 de puissance d'hélice pour déterminer la puissance consommée par l'hélice 5, 6 ou le cas échéant conjointement par les hélices 5, 6.

Le senseur 93 de puissance d'hélice peut comprendre pour chaque hélice 5, 6 un capteur de couple 931, 933 et un senseur 932, 934 de vitesse de rotation d'hélice, par exemple agencé sur une ligne de transmission de puissance 32, 35 voire sur un arbre 33, 36 de cette ligne de transmission de puissance 32, 35. Un tel capteur de couple 931, 933 peut, par exemple, comprendre un système à jauges de contrainte et à transmission sans fil entre la pièce tournante observée et un récepteur. Une unité du calculateur 45 peut recevoir les signaux de mesure émis et en déduire une puissance intermédiaire en multipliant le couple moteur mesuré et la vitesse de rotation mesurée, la puissance consommée par l'ensemble des hélices 5, 6 étant égale à la somme des puissances intermédiaires.

Le calculateur 45 peut recevoir au moins un signal de puissance rotor transmis par un senseur 94 de puissance rotor pour déterminer la puissance rotor consommée par la voilure tournante 10. Le senseur 94 de puissance rotor peut comprendre un capteur de couple 941 et un senseur 942 de vitesse de rotation rotor, par exemple agencé sur un mât rotor à la sortie de la boîte de transmission principale 31. Un tel capteur de couple 941 peut par exemple comprendre un système à jauges de contrainte et à transmission sans fil entre la pièce tournante observée et un récepteur. Une unité du calculateur 45 peut recevoir les signaux de mesure émis et en déduire la puissance consommée par la voilure tournante 10 en multipliant le couple moteur mesuré et la vitesse de rotation mesurée.

Le calculateur 45 peut recevoir au moins un signal de puissance moteur transmis par un senseur 96 de puissance moteur pour déterminer la puissance consommée par le ou les moteurs 25. Un tel senseur 96 de puissance moteur peut comprendre un senseur moteur usuel des moteurs 25, et par exemple pour chaque moteur 25 un capteur de couple et un senseur de vitesse de rotation moteur, par exemple agencé sur un arbre de sortie du moteur 25.

Le senseur 96 de puissance moteur peut communiquer avec le calculateur 45 directement ou via un calculateur moteur 960 par exemple.

De manière usuelle, un calculateur moteur 960 peut transmettre au calculateur 45 un signal porteur d'une puissance disponible PDISP pouvant être développée par l'installation motrice 20, par exemple en prenant en compte des pertes d'installation et la puissance consommée par d'autres organes que la voilure tournante et la ou les hélices de manière usuelle.

Le calculateur 45 peut recevoir au moins un signal d'incidence transmis par au moins un senseur 97 d'incidence usuel. Un tel senseur d'incidence peut comprendre un senseur de mesure d'une vitesse air, par exemple un système à tube de Pitot, et un senseur de vitesse verticale, par exemple une centrale inertielle ou un équivalent. Un calculateur peut alors déterminer le signal d'incidence en fonction d'une loi fonction des composantes de la vitesse air par rapport au giravion.

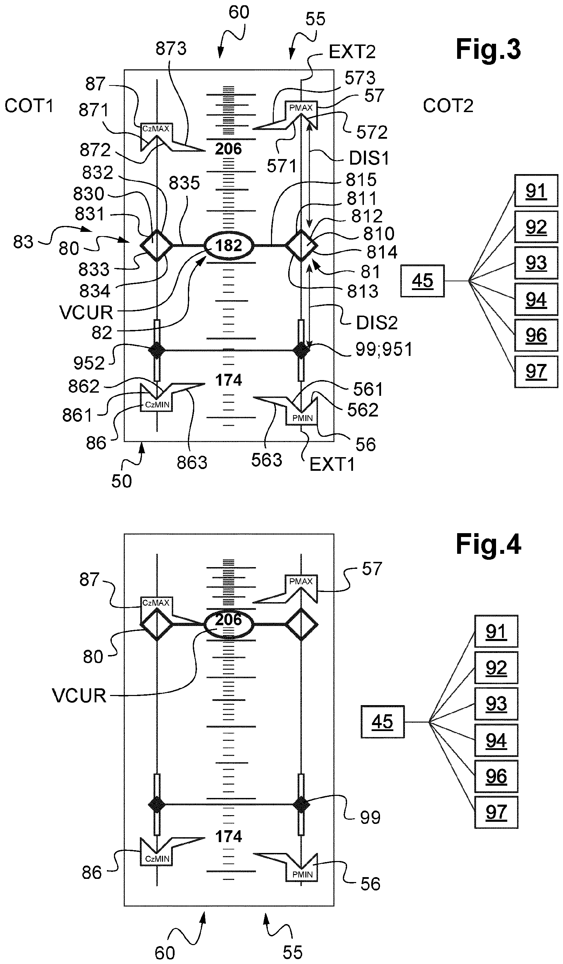

En référence à la figure 3, le calculateur 45 est configuré pour appliquer le procédé de l'invention en positionnant et en affichant sur l'afficheur 50 divers symboles pour aider un pilote à ne pas dépasser des limites, notamment une limite structurelle du système mécanique 30 ou une limite de puissance fournie à la voilure tournante 10, voire pour éviter que les pales 500, 600 de la ou des hélices 5, 6 décrochent d'un point de vue aérodynamique.

Ainsi, selon le procédé de l'invention, le calculateur 45 transmet un signal à l'afficheur 50 pour afficher une première échelle 55 image d'une puissance consommée par la ou les hélices 5, 6 conjointement. La première échelle 55 s'étend d'une première extrémité EXT1 à une deuxième extrémité EXT2.

De plus, le calculateur 45 transmet un signal à l'afficheur 50 pour afficher une deuxième échelle 60 graduée en vitesse d'avancement du giravion 1 à hélice.

La première échelle 55 et la deuxième échelle 60 peuvent être parallèles entre elles.

Par ailleurs, le calculateur 45 transmet un signal à l'afficheur 50 pour positionner et afficher un index 80 pointant à la fois la première échelle 55 et la deuxième échelle 60.

L'index 80 permet de visualiser la situation courante en désignant la vitesse d'avancement courante VCUR du giravion 1 à hélice sur la deuxième échelle et en imageant sur la première échelle 55 la puissance consommée par la ou les hélices 5, 6.

En particulier, l'index 80 comprend un tronçon de puissance 81 mobile le long de la première échelle 55. De plus, l'index 80 comprend un tronçon de vitesse 82 désignant une vitesse d'avancement courante VCUR sur la deuxième échelle 60.

Le tronçon de puissance 81 peut être solidaire du tronçon de vitesse 82. Par exemple, le tronçon de puissance 81 comprend un losange creux 810 ayant deux faces hautes 811, 812 situées au-dessus de deux faces basses 813, 814. De plus le tronçon de puissance 81 peut comprendre un segment horizontal 815 reliant le losange 810 au tronçon de vitesse 82.

Le tronçon de vitesse 82 peut comprendre une forme creuse entourant la valeur de vitesse d'avancement courante VCUR, par exemple une ellipse.

Par ailleurs, le calculateur 45 peut transmettre un signal à l'afficheur 50 pour positionner et afficher un repère de puissance minimale 56 sur la première échelle 55. Le repère de puissance minimale 56 peut comprendre un socle éventuellement solidaire d'un segment 563 dirigé vers la deuxième échelle 60. Le socle du repère de puissance minimale 56 a une forme complémentaire à une forme du tronçon de puissance 81. Par exemple, le socle du repère de puissance minimale 56 comprend deux faces inferieures 561, 562 formant un V et complémentaires aux faces basses 813, 814 du losange 810 du tronçon de puissance 81.

De même, un repère de puissance maximale 57 peut être placé par le calculateur 45 sur la première échelle 55. Le repère de puissance maximale 57 peut comprendre un socle éventuellement solidaire d'un segment 573 dirigé vers la deuxième échelle 60. Le socle du repère de puissance maximale 57 a une forme complémentaire à une forme du tronçon de puissance 81. Par exemple, le socle du repère de puissance maximale 57 comprend deux faces supérieures 571, 572 formant un V inversé et complémentaires aux faces hautes 811, 812 du losange 810 du tronçon de puissance 81.

Selon une possibilité, l'index 80 et la première échelle 55 sont rendus mobiles l'un par rapport à l'autre par le calculateur 45, l'index 80 et la deuxième échelle 60 étant rendus mobiles par le calculateur 45 l'un par rapport à l'autre.

Par exemple, la première échelle 55 est fixe. Le repère de puissance minimale 56, le repère de puissance maximale 57 sont alors mobiles sur l'afficheur 50, le calculateur déterminant leurs positions sur la première échelle.

De plus, l'index 80 est rendu mobile par le calculateur 45 par rapport à la première échelle 55. Le calculateur 45 calcule à cet effet la position de l'index 80 par rapport à la première échelle.

Dès lors, le calculateur 45 ajuste la deuxième échelle 60 pour que l'index 80 pointe la vitesse d'avancement courante VCUR.

La première échelle 55 peut comprendre ou ne pas comprendre des graduations. De même, la deuxième échelle 60 peut comprendre ou ne pas comprendre des graduations.

Selon l'exemple illustré, la première échelle 55 est fixe et ne comporte pas de graduations. A l'inverse la deuxième échelle 60 est variable en pouvant être déplacée, compressée ou dilatée et comporte des graduations 61. Un tel indicateur présente l'avantage d'être très lisible par un pilote.

Diverses variantes sont envisageables pour positionner l'index 80 au sein de la première échelle 55.

Selon la première variante, la première échelle 55 est indirectement l'image de la puissance courante PCUR en représentant la position de l'interface 95. La première extrémité EXT1 représente la première position POS1 et la deuxième extrémité EXT2 représente la deuxième position POS2. Le calculateur 45 détermine dès lors dans quelle position se trouve l'interface 95 à partir du signal transmis par le senseur 91 de position et positionne en conséquence l'index 80 à l'emplacement correspondant.

A cet effet, le calculateur 45 détermine une puissance courante PCUR consommée par la ou les hélices 5, 6 à l'aide du signal transmis par le senseur 93 de puissance d'hélice.

De plus, le calculateur 45 détermine une puissance maximale PMAX limite et une puissance minimale PMIN limite à ne pas dépasser dans des conditions normales de vol.

Par exemple, le calculateur 45 détermine sur réception du signal transmis par le senseur 94 de puissance rotor la puissance rotor PROT consommée par la voilure tournante 10. De plus, le calculateur 45 détermine la puissance disponible PDISPO. Éventuellement la puissance disponible PDISPO est établie en fonction de pertes d'installation et la puissance consommée par d'autres organes que la voilure tournante et la ou les hélices de manière usuelle ou ces pertes d'installations et puissances sont négligées. Par exemple, un calculateur moteur 960 détermine de manière usuelle la puissance disponible PDISPO au régime courant et transmet un signal au calculateur 45 porteur de cette puissance disponible PDISPO. Selon un autre exemple, le calculateur 45 comporte un tableau ou un équivalent fournissant la puissance disponible PDISPO pour chaque régime de vol et détermine la puissance disponible PDISPO au régime courant, le calculateur moteur 960 ou un autre organe transmettant au calculateur 45 le régime courant.

Dès lors, la puissance PMAX peut être égale à la puissance disponible PDISPO moins la puissance rotor PROT.

Selon un autre exemple, le système mécanique 30 peut supporter une puissance limite PLIM sans danger, et par exemple sans dégradations des lignes de transmission de puissance 32, 35. Dès lors, la puissance maximale PMAX peut être égale au minimum entre cette puissance limite PLIM et la puissance disponible PDISPO moins la puissance rotor PROT. La puissance limite PLIM peut être mémorisée. Alternativement, le calculateur 45 calcule selon le procédé la puissance limite en multipliant un couple prédéterminé mémorisé par un coefficient de proportionnalité éventuel et par une vitesse de rotation transmise par un senseur de vitesse d'hélice, à savoir un des senseurs 932, 934 de vitesse de rotation d'hélice.

En outre, le calculateur 45 est configuré pour déterminer la puissance minimale PMIN consommable par la ou les hélices 5, 6. Le repère de puissance minimale 56 est alors porteur de cette puissance minimale PMIN. Selon un exemple, cette puissance minimale PMIN peut être mémorisée. Selon un autre exemple, cette puissance minimale PMIN peut être calculée par le calculateur 45 et peut être égale au produit du couple prédéterminé mémorisé et d'une vitesse de rotation d'une hélice mesurée avec un senseur 932, 934 de vitesse de rotation d'hélice. En présence de plusieurs hélices, les hélices peuvent avoir une même vitesse de rotation.

Dès lors, le calculateur 45 est configuré pour déterminer dans quelle position l'interface 95 peut engendrer la puissance maximale PMAX et la puissance minimale PMIN pour placer le repère de puissance maximale 57 et le repère de puissance minimale 56.

A cet effet, le calculateur 45 calcule une première différence entre la puissance courante PCUR et la puissance maximale PMAX, et une deuxième différence entre la puissance courante PCUR et la puissance minimale PMIN.

Le calculateur 45 convertit ladite première différence et la deuxième différence en une première et une deuxième marges de pas respectives relatives au pas des pales 500, 600 des hélices 5, 6 à l'aide d'une loi de pas fournissant une marge de pas MRGPAS à partir d'une marge de puissance MRGP et d'un gradient GRD de puissance en fonction du pas soit MRGPAS=MRGPxGRD

L'enseignement du brevet FR 2 946 322 relatif à cette loi est utilisable, notamment pour déterminer la valeur dudit gradient.

Dès lors, le calculateur 45 convertit ladite première marge de pas et ladite deuxième marge de pas en une première distance DIS1 et une deuxième distance DIS2 à l'aide d'une loi de conversion. Une telle loi de conversion donne par exemple la distance concernée en fonction de la marge de pas concernée. Le calculateur 45 transmet alors un signal à l'afficheur 50 pour afficher aux positions requises le repère de puissance maximale 57 et le repère de puissance minimale 56.

Selon la deuxième variante, la première échelle 55 est directement l'image de la puissance courante PCUR.

Selon le procédé de l'invention, le calculateur 45 est configuré pour déterminer la puissance maximale PMAX consommable par la ou les hélices 5, 6. Le repère de puissance maximale 57 est alors porteur de cette puissance maximale PMAX et placé à l'endroit adéquat sur la première échelle 55.

En outre, le calculateur 45 est configuré pour déterminer la puissance minimale PMIN consommable par la ou les hélices 5, 6. Le repère de puissance minimale 56 est alors porteur de cette puissance minimale PMIN et placé à l'endroit adéquat sur la première échelle 55.

Quelle que soit la variante, lorsque l'index 80 est positionné, la deuxième échelle 60 est ajustée par le calculateur 45 pour placer la valeur de la vitesse d'avancement courante VCUR au niveau du tronçon de vitesse 82, voire dans le tronçon de vitesse 82.

Par exemple, le calculateur 45 peut être configuré pour afficher un repère de portance maximale 87 et un repère de portance minimale 86 par rapport à la première échelle. Le repère de portance maximale 87 et le repère de portance minimale 86 sont par exemple situés du premier côté COT1 de la deuxième échelle, le repère de puissance maximale 57 et le repère de puissance minimal 56 étant situés sur la première échelle d'un deuxième côté COT2 de la deuxième échelle 60.

Dès lors, l'index 80 peut comporter un tronçon de portance 83, par exemple solidaire du tronçon de vitesse 82. Le tronçon de vitesse 82 est ainsi agencé entre le tronçon de portance 83 et le tronçon de puissance 81.

Par exemple, le tronçon de portance 83 comprend un losange creux 830 ayant deux faces hautes 831, 832 situées au-dessus de deux faces basses 833, 834. De plus, le tronçon de portance 83 peut comprendre un segment horizontal 835 reliant le losange 830 au tronçon de vitesse 82, et éventuellement aligné avec le segment horizontal 815 du tronçon de puissance 81.

Par ailleurs, le repère de portance minimale 86 peut comprendre un socle éventuellement solidaire d'un segment 863 dirigé vers la deuxième échelle 60. Le socle du repère de portance minimale 86 a une forme complémentaire à une forme du tronçon de portance 83. Par exemple, le socle du repère de portance minimale 86 comprend deux faces inferieures 861, 862 formant un V et complémentaires aux faces basses 833, 834 du losange du tronçon de portance 83.

De même, le repère de portance maximale 87 peut comprendre un socle éventuellement solidaire d'un segment 873 dirigé vers la deuxième échelle 60. Le socle du repère de portance maximale 87 a une forme complémentaire à une forme du tronçon de portance 83. Par exemple, le socle du repère de portance maximale 86 comprend deux faces supérieures 871, 872 formant un V inversé et complémentaires aux faces hautes 831, 832 du losange du tronçon de portance 83.

Pour positionner le repère de portance maximale 87 et le repère de portance minimale 86, le calculateur 45 calcule la position du repère de portance maximale 87 et la position du repère de portance minimale 86 par rapport à la première échelle et au premier index à l'aide d'une loi de placement. Avec le coefficient de portance maximale, la loi de placement fournit la position du repère de portance maximale au sein de la première échelle 55. Avec le coefficient de portance minimale, la loi de placement fournit la position du repère de portance minimale au sein de la première échelle 55. La loi de placement peut être fonction par exemple de la vitesse d'avancement courante VCUR du giravion mesurée avec le senseur 92 de vitesse d'avancement, d'une vitesse de rotation d'une hélice mesurée avec le senseur 93 de vitesse de rotation d'hélice, et/ou d'une incidence du giravion mesurée avec le senseur 97 d'incidence.

Par ailleurs, le calculateur 45 peut calculer une vitesse d'avancement maximale VMAX pour une position de l'index sur le repère de portance maximale 87 ou le repère de puissance maximale 57 le plus proche de l'index 80, et selon l'exemple de la figure 3, le repère de portance maximale 87. De même, le calculateur 45 peut calculer une vitesse d'avancement minimale VMIN pour une position de l'index 80 sur le repère de portance minimale 86 ou le repère de puissance minimale 56 le plus proche de l'index 80, et selon l'exemple de la figure 3, le repère de portance minimale 86.

Le calculateur 45 transmet alors un signal à l'afficheur 50 pour afficher la valeur de la vitesse d'avancement minimale VMIN au niveau du repère adéquat et le cas échéant de son bras. De même, le calculateur 45 transmet alors un signal à l'afficheur 50 pour afficher la valeur de la vitesse d'avancement maximale VMAX au niveau du repère adéquat et le cas échéant de son bras.

Le calculateur 45 transmet alors un signal à l'afficheur 50 pour dilater ou compresser la deuxième échelle 60 en conséquence.

Par ailleurs, le calculateur 45 est configuré pour afficher un repère 99 de poussée nulle porteur d'une poussée d'avancement nulle exercée par la ou les hélices 5, 6.

Le calculateur 45 peut calculer un pas moyen des pales 500, 600 de la ou les hélices 5, 6 engendrant la poussée d'avancement nulle, la ou les hélices 5, 6 exerçant éventuellement chacune une poussée non nulle uniquement dans le but de contrôler conjointement le mouvement en lacet du giravion 1. Le calculateur 45 convertit ce pas en une position au sein de la première échelle.

Dès lors, le calculateur 45 positionne le repère 99 de poussée nulle par rapport à la première échelle 55.

Le repère 99 de poussée nulle peut comporter une forme complémentaire à une forme du tronçon de puissance 81 voire du tronçon de portance 83.

Par exemple, le repère 99 de poussée nulle comprend au moins un losange 951 pouvant être inscrit dans le tronçon de puissance 81. Eventuellement, le repère 99 de poussée nulle comprend deux losanges 951, 952 reliés par un segment horizontal, un losange 952 pouvant s'inscrire dans le tronçon de portance 83 et un losange 951 pouvant s'inscrire dans le tronçon de puissance 81.

La figure 3 illustre le fonctionnement du dispositif 40 d'aide au pilotage lorsque la ou les hélices 5, 6 exercent une poussée pour faire avancer le giravion 1 à hélice.

En référence à la figure 4, lorsque le pas des pales 500, 600 de chaque hélice 5, 6 augmente, l'index 80 se déplace vers le haut, à savoir vers le repère de puissance maximale 57 et le cas échéant vers le repère de portance maximale 87. Si le repère de portance maximale 87 est atteint, le pas des pales 500, 600 de chaque hélice 5, 6 ne doit plus être augmenté.

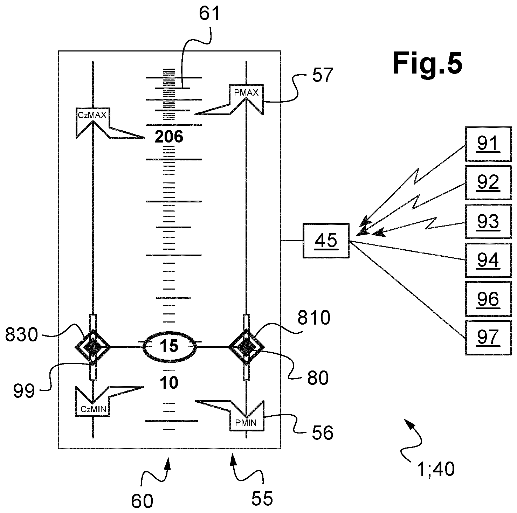

En référence à la figure 5, lorsque le pas des pales 500, 600 de chaque hélice 5, 6 baisse, l'index 80 se déplace vers le bas, à savoir vers le repère de puissance minimale 56 et le cas échéant vers le repère de portance minimal 86. Si le repère 99 de poussée nulle est atteint, le giravion 1 peut être dans une phase de vol stationnaire.

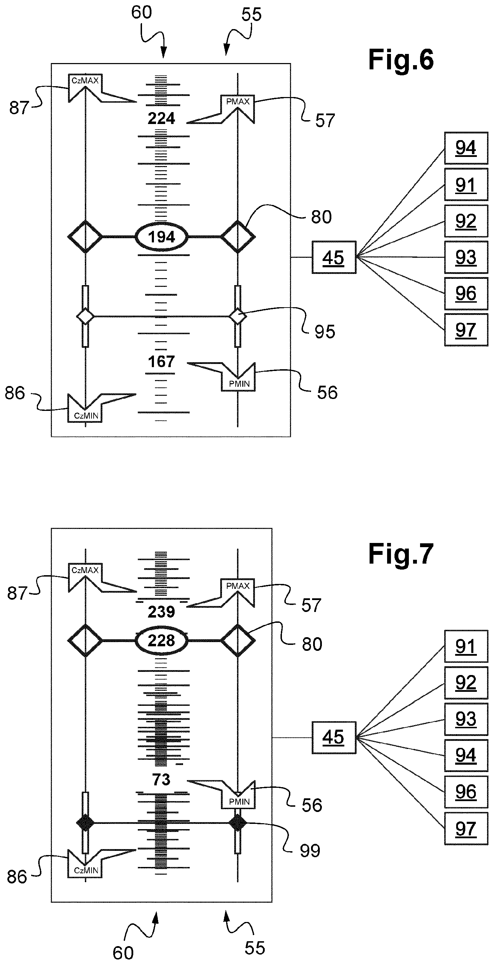

Les figures 6 et 7 illustrent le fait que les repères de portance et de puissance et de poussée nulle sont mobiles.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé d'aide au pilotage d'un giravion (1) à hélice, ledit giravion (1) à hélice ayant une installation motrice (20) reliée par un système mécanique (30) à une voilure tournante (10) et à au moins une hélice (5, 6), ledit procédé comportant les étapes suivantes :
- affichage sur commande d'un calculateur (45) et sur un afficheur (50) d'un repère de puissance minimale (56) et d'un repère de puissance maximale (57) sur une première échelle (55), ladite première échelle (55) étant une image d'une puissance consommée par ladite au moins une hélice (5, 6), le repère de puissance minimale (56) étant une image d'une puissance minimale (PMIN) consommable par ladite au moins une hélice (5, 6), le repère de puissance maximale (57) étant une image d'une puissance maximale (PMAX) consommable par ladite au moins une hélice (5, 6)
- affichage sur commande du calculateur (45) et sur l'afficheur (50) d'une deuxième échelle (60) graduée en vitesse d'avancement du giravion (1) à hélice,
- affichage sur commande du calculateur (45) et sur l'afficheur (50) d'un index (80) comprenant un tronçon de puissance (81) image d'une puissance courante (PCUR) consommée par ladite au moins une hélice (5, 6), ledit index (80) comprenant un tronçon de vitesse (82) désignant une vitesse d'avancement courante (VCUR) sur ladite deuxième échelle (60), ledit index (80) et ladite première échelle (55) étant mobiles l'un par rapport à l'autre, ledit index (80) et ladite deuxième échelle (60) étant mobiles l'un par rapport à l'autre
- affichage sur l'afficheur (50) et sur commande dudit calculateur d'un repère (99) de poussée nulle porteur d'une poussée d'avancement nulle exercée par ladite au moins une hélice (5, 6).

2. Procédé selon la revendication 1,
**caractérisé en ce que** le procédé comporte sur commande dudit calculateur (45) un affichage sur l'afficheur (50) dudit index (80) par rapport à la première échelle (55) et un affichage sur l'afficheur (50) du repère de puissance minimale (56) et du repère de puissance maximale (57) par rapport à l'index (55) ainsi qu'un ajustement de la deuxième échelle (60) afin que ledit index (80) désigne la vitesse d'avancement courante (VCUR).

3. Procédé selon l'une quelconque des revendications 1 à 2,
**caractérisé en ce que** le procédé comporte une mesure avec un senseur (91) de position d'une position courante d'une interface (95) pilotant un pas moyen de chaque pale (500, 600) de ladite au moins une hélice (5, 6), ladite interface (95) étant mobile entre une première position (POS1) et une deuxième position (POS2) illustrées par des extrémités (EXT1, EXT2) de la première échelle (55), ladite première échelle (55) étant graduée en positions de ladite interface (95), ledit procédé comportant les étapes suivantes :
- détermination avec le calculateur (45) de la puissance maximale (PMAX), de la puissance minimale (PMIN) et de la puissance courante (PCUR),
- affichage sur l'afficheur (50) commandé par le calculateur (45) dudit index (80) en fonction de ladite position courante (POSCUR),
- affichage sur l'afficheur (50) commandé par le calculateur (45) dudit repère de puissance maximale (57) par rapport à l'index en fonction d'une première différence entre la puissance courante (PCUR) et la puissance maximale (PMAX),
- affichage sur l'afficheur (50) commandé par le calculateur (45) dudit repère de puissance minimale (56) par rapport à l'index (80) en fonction d'une deuxième différence entre la puissance courante (PCUR) et la puissance minimale (PMIN).

4. Procédé selon la revendication 3,
**caractérisé en ce que** ledit procédé comporte une conversion avec ledit calculateur (45) de ladite première différence et de la deuxième différence en une première et une deuxième marges de pas respectives à l'aide d'une loi de pas fournissant une marge de pas à partir d'une marge de puissance et d'un gradient (GRD) de puissance en fonction du pas, ledit procédé comportant une conversion avec ledit calculateur (45) à l'aide d'une loi de conversion de ladite première marge de pas et de ladite deuxième marge de pas en une première distance (DIS1) séparant l'index (80) du repère de puissance maximale (57) et une deuxième distance (DIS2) séparant l'index (80) du repère de puissance minimale (56) .

5. Procédé selon l'une quelconque des revendications 1 à 2,
**caractérisé en ce que** ledit procédé comporte les étapes suivantes:
- détermination avec le calculateur (45) de la puissance maximale (PMAX), de la puissance minimale (PMIN) et de la puissance courante (PCUR),
- positionnement avec le calculateur (45) dudit index (80) ainsi que du repère de puissance minimale (56) et du repère de puissance maximale (57) par rapport à la première échelle (55) en fonction de la puissance courante (PCUR) ainsi que de la puissance minimale (PMIN) et de la puissance maximale (PMAX), ladite première échelle (50) étant graduée en puissance.

6. Procédé selon l'une quelconque des revendications 3 à 5, **caractérisé en ce que** ladite détermination avec le calculateur (45) de la puissance maximale (PMAX) comporte les étapes suivantes :
- détermination avec le calculateur (45) d'une puissance disponible (PDISPO) pouvant être fournie par l'installation motrice (20), un senseur de puissance moteur (96) transmettant un signal de puissance moteur au calculateur (45) porteur de la puissance disponible (PDISPO),
- détermination avec le calculateur (45) d'une puissance rotor (PROT) consommée par la voilure tournante (10), un senseur de puissance rotor (94) transmettant un signal de puissance rotor au calculateur (45) porteur de la puissance rotor (PROT)
- détermination avec le calculateur (45) d'une différence entre la puissance disponible (PDISPO) et la puissance rotor (PROT).

7. Procédé selon la revendication 6,
**caractérisé en ce que** ladite détermination avec le calculateur (45) de la puissance maximale (PMAX) comporte :
- détermination avec le calculateur (45) d'une puissance limite du système mécanique (30), la puissance maximale (PMAX) étant égale au minimum entre la puissance limite et la différence entre la puissance disponible (PDISPO) et la puissance rotor (PROT).

8. Procédé selon la revendication 7,
**caractérisé en ce que** ledit dispositif (40) d'aide au pilotage comporte un senseur (932, 934) de vitesse d'hélice transmettant au calculateur (45) un signal de vitesse porteur d'une vitesse de rotation de ladite au moins une hélice (5,6), ladite puissance limite étant égale au produit d'un couple prédéterminé et de ladite vitesse de rotation.

9. Procédé selon l'une quelconque des revendications 1 à 8, **caractérisé en ce que** ladite puissance minimale (PMIN) est soit une constante soit égale au produit d'un couple prédéterminé et d'une vitesse de rotation mesurée par un senseur (932, 934) de vitesse d'hélice transmettant au calculateur (45) un signal de vitesse porteur de la vitesse de rotation.

10. Procédé selon l'une quelconque des revendications 1 à 9,
**caractérisé en ce que** ledit tronçon de puissance (81) comporte une forme complémentaire à une forme du repère de puissance minimale (56) et à une forme du repère de puissance maximale (57).

11. Procédé selon la revendication 10,
**caractérisé en ce que** ledit tronçon de puissance (81) comporte une forme de losange (810) creux, ledit repère de puissance maximale (57) ayant deux faces (571, 572) supérieures conformées à deux faces (811, 812) dudit losange (810) et ledit repère de puissance minimale (56) ayant deux faces inférieures (561, 562) conformées à deux autres faces (813, 814) dudit losange (810).

12. Procédé selon l'une quelconque des revendications 1 à 11,
**caractérisé en ce que** ledit tronçon de vitesse (82) entoure une valeur de la vitesse d'avancement courante (VCUR).

13. Procédé selon l'une quelconque des revendications 1 à 12,
**caractérisé en ce que** ladite première échelle (55) et ladite deuxième échelle (60) sont parallèles entre elles.

14. Procédé selon l'une quelconque des revendications 1 à 13,
**caractérisé en ce que** ledit procédé comporte un affichage sur l'afficheur (50) sur commande du calculateur (45) par rapport à la première échelle d'un repère de portance maximale (87) porteur du coefficient de portance maximale (CZMAX) de ladite au moins une hélice ainsi que d'un repère de portance minimale (86) porteur du coefficient de portance minimale (CZMIN) de ladite au moins une hélice, ledit index (80) comportant un tronçon de portance (83) ayant une forme complémentaire à une forme du repère de portance minimale (86) et à une forme du repère de portance maximale (87).

15. Procédé selon la revendication 14,
**caractérisé en ce que** ladite deuxième échelle (60) séparant un premier côté (COT1) et un deuxième côté (COT2), le repère de portance maximale (87) et le repère de portance minimale (86) sont situés du premier côté (COT1), le repère de puissance maximale (57) et le repère de puissance minimal (56) étant situés sur la première échelle du deuxième côté (COT2).

16. Procédé selon l'une quelconque des revendications 14 à 15,
**caractérisé en ce que** ledit procédé comporte la détermination avec le calculateur (45) de positions du repère de portance maximale et du repère de portance minimale au regard de la première échelle en fonction d'une loi de placement fournissant la position du repère de portance maximale (87) au sein de la première échelle (55) en fonction du coefficient de portance maximale (CZMAX) et la position du repère de portance minimale (86) au sein de la première échelle (55) en fonction du coefficient de portance minimale (CZMIN).

17. Procédé selon l'une quelconque des revendications 14 à 16,
**caractérisé en ce que** ledit procédé comporte les étapes suivantes :
- calcul avec ledit calculateur (45) d'une vitesse d'avancement maximale (VMAX) pour une position de l'index sur le repère de portance maximale (87) ou le repère de puissance maximale (57) le plus proche de l'index (80) et affichage sur l'afficheur (50) de cette vitesse d'avancement maximale (VMAX),
- calcul avec ledit calculateur (45) d'une vitesse d'avancement minimale (VMIN) pour une position de l'index sur le repère de portance minimale (86) ou le repère de puissance minimale (56) le plus proche de l'index (80) et affichage sur l'afficheur (50) de cette vitesse d'avancement minimale (VMIN),
- ajustement avec ledit calculateur (45) de la deuxième échelle (60) en fonction de la vitesse d'avancement courante (VCUR), de la vitesse d'avancement minimale (VMIN) et de la vitesse d'avancement maximale (VMAX).

18. Procédé selon l'une quelconque des revendications 1 à 17, **caractérisé en ce que** ledit repère (99) de poussée nulle comporte une forme complémentaire à une forme du tronçon de puissance (81).

19. Procédé selon l'une quelconque des revendications 1 à 18, **caractérisé en ce que** ledit repère (99) de poussée nulle a une forme de losange pouvant être inscrite dans un losange (810) creux du tronçon de puissance (81).

20. Dispositif (40) d'aide au pilotage d'un giravion (1) à hélice, ledit giravion (1) à hélice ayant une installation motrice (20) reliée par un système mécanique (30) à une voilure tournante (10) et à au moins une hélice (5, 6), le dispositif (40) d'aide au pilotage comportant un calculateur (45) et un afficheur (50) configurés pour appliquer le procédé selon l'une quelconque de revendications précédentes, ledit calculateur (45) étant configuré pour :
- piloter l' afficheur (50) pour afficher un repère de puissance minimale (56) et un repère de puissance maximale (57) sur une première échelle (55), ladite première échelle étant une image d'une puissance consommée par ladite au moins une hélice (5, 6), le repère de puissance minimale (56) étant une image d'une puissance minimale consommable par ladite au moins une hélice (5, 6), le repère de puissance maximale (57) étant une image d'une puissance maximale consommable par ladite au moins une hélice (5, 6)
- piloter l'afficheur (50) pour afficher une deuxième échelle (60) graduée en vitesse d'avancement du giravion (1) à hélice,
- piloter l'afficheur (50) pour afficher un index (80) comprenant un tronçon de puissance (81) image d'une puissance courante consommée par ladite au moins une hélice, ledit index (80) comprenant un tronçon de vitesse (82) désignant une vitesse d'avancement courante (VCUR) sur ladite deuxième échelle (60), ledit index (80) et ladite première échelle (55) étant mobiles l'un par rapport à l'autre, ledit index (80) et ladite deuxième échelle (60) étant mobiles l'un par rapport à l'autre
- piloter l'afficheur (50) pour afficher un repère (99) de poussée nulle porteur d'une poussée d'avancement nulle exercée par ladite au moins une hélice (5, 6).

21. Dispositif (40) selon la revendication 20,
**caractérisé en ce que** le dispositif (40) d'aide au pilotage comporte au moins un des organes suivants : un senseur (91) de position émettant un signal porteur d'une position courante (POSCUR) d'une interface pilotant un pas moyen de pales (500,600) de ladite au moins une hélice (5,6), un senseur (92) de vitesse d'avancement émettant un signal porteur d'une vitesse d'avancement courante (VCUR) du giravion vers le calculateur (45), un senseur (93) de puissance d'hélice émettant vers le calculateur (45) un signal porteur d'une puissance consommée par ladite au moins une hélice (5,6), un senseur (94) de puissance rotor émettant vers le calculateur (45) un signal porteur d'une puissance consommée par ladite voilure tournante (10), un senseur (97) d'incidence émettant vers le calculateur (45) un signal porteur d'une incidence du giravion (1), un senseur (96) de puissance moteur émettant vers le calculateur (45) un signal porteur d'une puissance consommée par l'installation motrice (20) et un calculateur moteur (960) émettant vers le calculateur (45) un signal porteur d'une puissance disponible.

22. Giravion (1) à hélice, ledit giravion (1) à hélice ayant une installation motrice (20) reliée par un système mécanique (30) à une voilure tournante (10) et à au moins une hélice (5, 6),
**caractérisé en ce que** le giravion (1) à hélice comporte un dispositif (40) d'aide au pilotage selon l'une quelconque des revendications 20 à 21.

## Patentansprüche

1. Verfahren zur Unterstützung der Steuerung eines Propeller-Drehflüglers (1), wobei der Propeller-Drehflügler (1) eine Triebwerksanlage (20) aufweist, die über ein mechanisches System (30) mit einem Drehflügel (10) und mit mindestens einem Propeller (5, 6) verbunden ist, wobei das Verfahren die folgenden Schritte umfasst:
- Anzeigen, auf Befehl eines Rechners (45) und auf einem Display (50), einer Minimalleistungsmarke (56) und einer Maximalleistungsmarke (57) auf einer ersten Skala (55), wobei die erste Skala (55) eine Abbildung einer von dem mindestens einen Propeller (5, 6) verbrauchten Leistung ist, wobei die Minimalleistungsmarke (56) eine Abbildung einer Minimalleistung (PMIN) ist, die von dem mindestens einen Propeller (5, 6) verbraucht werden kann, und die Maximalleistungsmarke (57) eine Abbildung einer Maximalleistung (PMAX) ist, die von dem mindestens einen Propeller (5, 6) verbraucht werden kann,
- Anzeigen, auf Befehl des Rechners (45) und auf dem Display (50), einer zweiten Skala (60), die mit der Vortriebsgeschwindigkeit des Propeller-Drehflüglers (1) skaliert ist,
- Anzeigen, auf Befehl des Rechners (45) und auf dem Display (50), eines Index (80), der einen Leistungsabschnitt (81) umfasst, der eine aktuell von dem mindestens einen Propeller (5, 6) verbrauchte Leistung (PCUR) abbildet, wobei der Index (80) einen Geschwindigkeitsabschnitt (82) umfasst, der auf der zweiten Skala (60) eine aktuelle Vortriebsgeschwindigkeit (VCUR) bezeichnet, wobei der Index (80) und die erste Skala (55) relativ zueinander beweglich sind, und der Index (80) und die zweite Skala (60) relativ zueinander beweglich sind,
- Anzeigen, auf dem Display (50) und auf Befehl des Rechners, einer Nullschubmarke (99), die einen von dem mindestens einen Propeller (5, 6) ausgeübten Vortriebsschub von Null angibt.

2. Verfahren nach Anspruch 1,
**dadurch gekennzeichnet, dass** das Verfahren auf Befehl des Rechners (45) ein Anzeigen des Index (80) in Bezug auf die erste Skala (55) auf dem Display (50) und ein Anzeigen der Minimalleistungsmarke (56) und der Maximalleistungsmarke (57) in Bezug auf den Index (55) auf dem Display (50) sowie ein Anpassen der zweiten Skala (60) derart umfasst, dass der Index (80) die aktuelle Vortriebsgeschwindigkeit (VCUR) bezeichnet.

3. Verfahren nach einem der Ansprüche 1 bis 2,
**dadurch gekennzeichnet, dass** das Verfahren ein Messen einer aktuellen Position einer Schnittstelle (95), die einen mittleren Anstellwinkel jedes Blattes (500, 600) des mindestens einen Propellers (5, 6) steuert, mit einem Positionssensor (91) umfasst, wobei die Schnittstelle (95) zwischen einer ersten Position (POS1) und einer zweiten Position (POS2) beweglich ist, die durch Enden (EXT1, EXT2) der ersten Skala (55) veranschaulicht werden, wobei die erste Skala (55) mit Positionen der Schnittstelle (95) skaliert ist, wobei das Verfahren die folgenden Schritte umfasst:
- Bestimmen, mit dem Rechner (45), der Maximalleistung (PMAX), der Minimalleistung (PMIN) und der aktuellen Leistung (PCUR),
- Anzeigen, auf dem vom Rechner (45) gesteuerten Display (50), des Index (80) in Abhängigkeit von der aktuellen Position (POSCUR),
- Anzeigen, auf dem vom Rechner (45) gesteuerten Display (50), der Maximalleistungsmarke (57) in Bezug auf den Index in Abhängigkeit von einer ersten Differenz zwischen der aktuellen Leistung (PCUR) und der Maximalleistung (PMAX),
- Anzeigen, auf dem vom Rechner (45) gesteuerten Display (50), der Minimalleistungsmarke (56) in Bezug auf den Index (80) in Abhängigkeit von einer zweiten Differenz zwischen der aktuellen Leistung (PCUR) und der Minimalleistung (PMIN).

4. Verfahren nach Anspruch 3,
**dadurch gekennzeichnet, dass** das Verfahren ein Umwandeln, mit dem Rechner (45), der ersten Differenz und der zweiten Differenz in jeweils einen ersten und zweiten Anstellwinkelspielraum unter Verwendung einer Anstellwinkelregel umfasst, die einen Anstellwinkelspielraum aus einem Leistungsspielraum und einem Gradienten (GRD) der Leistung als Funktion des Anstellwinkels bereitstellt, wobei das Verfahren ein Umrechnen, mit dem Rechner (45) und unter Verwendung einer Umrechenregel, des ersten Anstellwinkelspielraums und des zweiten Anstellwinkelspielraums in einen ersten Abstand (DIS1), der den Index (80) von der Maximalleistungsmarke (57) trennt, und einen zweiten Abstand (DIS2), der den Index (80) von der Minimalleistungsmarke (56) trennt, umfasst.

5. Verfahren nach einem der Ansprüche 1 bis 2,
**dadurch gekennzeichnet, dass** das Verfahren die folgenden Schritte umfasst:
- Bestimmen der Maximalleistung (PMAX), der Minimalleistung (PMIN) und der aktuellen Leistung (PCUR) mit dem Rechner (45),
- Positionieren des Index (80), der Minimalleistungsmarke (56) und der Maximalleistungsmarke (57) mit dem Rechner (45) in Bezug auf die erste Skala (55) in Abhängigkeit von der aktuellen Leistung (PCUR), der Minimalleistung (PMIN) und der Maximalleistung (PMAX), wobei die erste Skala (50) mit Leistung skaliert ist.

6. Verfahren nach einem der Ansprüche 3 bis 5,
**dadurch gekennzeichnet, dass** das Bestimmen der Maximalleistung (PMAX) mit dem Rechner (45) die folgenden Schritte umfasst:
- Bestimmen, mit dem Rechner (45), einer verfügbaren Leistung (PDISPO), die von der Triebwerksanlage (20) lieferbar ist, wobei ein Motorleistungssensor (96) ein Motorleistungssignal an den Rechner (45) überträgt, das die verfügbare Leistung (PDISPO) angibt,
- Bestimmen einer von dem Drehflügel (10) verbrauchten Rotorleistung (PROT) mit dem Rechner (45), wobei ein Rotorleistungssensor (94) ein Rotorleistungssignal an den Rechner (45) überträgt, das die Rotorleistung (PROT) angibt,
- Bestimmen, mit dem Rechner (45), einer Differenz zwischen der verfügbaren Leistung (PDISPO) und der Rotorleistung (PROT).

7. Verfahren nach Anspruch 6,
**dadurch gekennzeichnet, dass** das Bestimmen der Maximalleistung (PMAX) mit dem Rechner (45) umfasst:
- Bestimmen, mit dem Rechner (45), einer Grenzleistung des mechanischen Systems (30), wobei die Maximalleistung (PMAX) gleich dem Minimum aus der Grenzleistung und der Differenz zwischen der verfügbaren Leistung (PDISPO) und der Rotorleistung (PROT) ist.

8. Verfahren nach Anspruch 7,
**dadurch gekennzeichnet, dass** die Vorrichtung (40) zur Unterstützung der Steuerung einen Sensor (932, 934) für die Propellergeschwindigkeit umfasst, der an den Rechner (45) ein Geschwindigkeitssignal überträgt, das eine Drehgeschwindigkeit des mindestens einen Propellers (5, 6) angibt, wobei die Grenzleistung gleich dem Produkt aus einem vorgegebenen Drehmoment und der Drehgeschwindigkeit ist.

9. Verfahren nach einem der Ansprüche 1 bis 8,
**dadurch gekennzeichnet, dass** die Minimalleistung (PMIN) entweder eine Konstante oder gleich dem Produkt aus einem vorgegebenen Drehmoment und einer Drehgeschwindigkeit ist, die von einem Propellergeschwindigkeitssensor (932, 934) gemessen wird, der ein Geschwindigkeitssignal, das die Drehgeschwindigkeit angibt, an den Rechner (45) überträgt.

10. Verfahren nach einem der Ansprüche 1 bis 9,
**dadurch gekennzeichnet, dass** der Leistungsabschnitt (81) eine Form aufweist, die komplementär zu einer Form der Minimalleistungsmarke (56) und zu einer Form der Maximalleistungsmarke (57) ist.

11. Verfahren nach Anspruch 10,
**dadurch gekennzeichnet, dass** der Leistungsabschnitt (81) die Form einer hohlen Raute (810) aufweist, wobei die Maximalleistungsmarke (57) zwei obere Seiten (571, 572) aufweist, die an zwei Seiten (811, 812) der Raute (810) angeformt sind, und die Minimalleistungsmarke (56) zwei untere Seiten (561, 562) aufweist, die an zwei weitere Seiten (813, 814) der Raute (810) angeformt sind.

12. Verfahren nach einem der Ansprüche 1 bis 11,
**dadurch gekennzeichnet, dass** der Geschwindigkeitsabschnitt (82) einen Wert der aktuellen Vortriebsgeschwindigkeit (VCUR) umgibt.

13. Verfahren nach einem der Ansprüche 1 bis 12,
**dadurch gekennzeichnet, dass** die erste Skala (55) und die zweite Skala (60) parallel zueinander sind.

14. Verfahren nach einem der Ansprüche 1 bis 13,
**dadurch gekennzeichnet, dass** das Verfahren ein Anzeigen, auf dem Display (50) auf Befehl des Rechners (45) und in Bezug auf die erste Skala, einer Maximalauftriebsmarke (87), die den maximalen Auftriebskoeffizienten (CZMAX) des mindestens einen Propellers angibt, sowie einer Minimalauftriebsmarke (86), die den minimalen Auftriebskoeffizienten (CZMIN) des mindestens einen Propellers angibt, umfasst, wobei der Index (80) einen Auftriebsabschnitt (83) mit einer Form aufweist, die komplementär zu einer Form der Minimalauftriebsmarke (86) und zu einer Form der Maximalauftriebsmarke (87) ist.

15. Verfahren nach Anspruch 14,
**dadurch gekennzeichnet, dass** die zweite Skala (60) eine erste Seite (COT1) und eine zweite Seite (COT2) trennt, dass die Maximalauftriebsmarke (87) und die Minimalauftriebsmarke (86) auf der ersten Seite (COT1) angeordnet sind, und dass die Maximalleistungsmarke (57) und die Minimalleistungsmarke (56) an der ersten Skala auf der zweiten Seite (COT2) angeordnet sind.

16. Verfahren nach einem der Ansprüche 14 bis 15,
**dadurch gekennzeichnet, dass** das Verfahren das Bestimmen, mit dem Rechner (45), von Positionen der Maximalauftriebsmarke und der Minimalauftriebsmarke in Bezug auf die erste Skala in Abhängigkeit von einer Platzierungsregel umfasst, die die Position der Maximalauftriebsmarke (87) innerhalb der ersten Skala (55) in Abhängigkeit von dem Maximalauftriebskoeffizienten (CZMAX) und die Position der Minimalauftriebsmarke (86) innerhalb der ersten Skala (55) in Abhängigkeit von dem Minimalauftriebskoeffizienten (CZMIN) liefert.

17. Verfahren nach einem der Ansprüche 14 bis 16,
**dadurch gekennzeichnet, dass** das Verfahren die folgenden Schritte umfasst:
- Berechnen, mit dem Rechner (45), einer Maximalvortriebsgeschwindigkeit (VMAX) für eine Position des Index an der Maximalauftriebsmarke (87) oder der Maximalleistungsmarke (57), die dem Index (80) am nächsten liegt, und Anzeigen dieser Maximalvortriebsgeschwindigkeit (VMAX) auf dem Display (50),
- Berechnen, mit dem Rechner (45), einer Minimalvortriebsgeschwindigkeit (VMIN) für eine Position des Index an der Minimalauftriebsmarke (86) oder der Minimalleistungsmarke (56), die dem Index (80) am nächsten liegt, und Anzeigen dieser Minimalvortriebsgeschwindigkeit (VMIN) auf dem Display (50),
- Einstellen, mit dem Rechner (45), der zweiten Skala (60) in Abhängigkeit von der aktuellen Vortriebsgeschwindigkeit (VCUR), der Minimalvortriebsgeschwindigkeit (VMIN) und der Maximalvortriebsgeschwindigkeit (VMAX).

18. Verfahren nach einem der Ansprüche 1 bis 17,
**dadurch gekennzeichnet, dass** die Nullschubmarke (99) eine Form aufweist, die komplementär zu einer Form des Leistungsabschnitts (81) ist.

19. Verfahren nach einem der Ansprüche 1 bis 18,
**dadurch gekennzeichnet, dass** die Nullschubmarkierung (99) eine Rautenform aufweist, die in eine hohle Raute (810) des Leistungsabschnitts (81) eingeschrieben werden kann.

20. Vorrichtung (40) zur Unterstützung der Steuerung eines Propeller-Drehflüglers (1), wobei der Propeller-Drehflügler (1) eine Triebwerksanlage (20) aufweist, die über ein mechanisches System (30) mit einem Drehflügel (10) und mindestens einem Propeller (5, 6) verbunden ist, wobei die Vorrichtung (40) zur Unterstützung der Steuerung einen Rechner (45) und ein Display (50) umfasst, die konfiguriert sind, um das Verfahren nach einem der vorhergehenden Ansprüche auszuführen, wobei der Rechner (45) konfiguriert ist,
- das Display (50) so zu steuern, dass es eine Minimalleistungsmarke (56) und eine Maximalleistungsmarke (57) auf einer ersten Skala (55) anzeigt, wobei die erste Skala eine Abbildung einer von dem mindestens einen Propeller (5, 6) verbrauchten Leistung ist, wobei die Minimalleistungsmarke (56) eine Abbildung einer Minimalleistung ist, die von dem mindestens einen Propeller (5, 6) verbraucht werden kann, und die Maximalleistungsmarke (57) eine Abbildung einer Maximalleistung ist, die von dem mindestens einen Propeller (5, 6) verbraucht werden kann,
- das Display (50) so zu steuern, dass es eine zweite Skala (60) anzeigt, die mit der Vortriebsgeschwindigkeit des Propeller-Drehflüglers (1) skaliert ist,
- das Display (50) so zu steuern, dass es einen Index (80) anzeigt, der einen Leistungsabschnitt (81) umfasst, der eine aktuell von dem mindestens einen Propeller verbrauchte Leistung abbildet, wobei der Index (80) einen Geschwindigkeitsabschnitt (82) umfasst, der eine aktuelle Vortriebsgeschwindigkeit (VCUR) auf der zweiten Skala (60) bezeichnet, wobei der Index (80) und die erste Skala (55) relativ zueinander beweglich sind, und der Index (80) und die zweite Skala (60) relativ zueinander beweglich sind,
- das Display (50) so zu steuern, dass es eine Nullschubmarke (99) anzeigt, die einen von dem mindestens einen Propeller (5, 6) ausgeübten Vortriebsschub von Null angibt.

21. Vorrichtung (40) nach Anspruch 20,
**dadurch gekennzeichnet, dass** die Vorrichtung (40) zur Unterstützung der Steuerung mindestens eines der folgenden Organe umfasst: einen Positionssensor (91), der an den Rechner (45) ein Signal sendet, das eine aktuelle Position (POSCUR) einer Schnittstelle angibt, die einen mittleren Anstellwinkel der Blätter (500, 600) des mindestens einen Propellers (5, 6) steuert, einen Vortriebsgeschwindigkeitsensor (92), der an den Rechner (45) ein Signal sendet, das eine aktuelle Vortriebsgeschwindigkeit (VCUR) des Drehflüglers angibt, einen Propellerleistungssensor (93), der an den Rechner (45) ein Signal sendet, das eine von dem mindestens einen Propeller (5, 6) verbrauchte Leistung angibt, einen Rotorleistungssensor (94), der an den Rechner (45) ein Signal sendet, das eine von dem Drehflügel (10) verbrauchte Leistung angibt, einen Anstellwinkelsensor (97), der an den Rechner (45) ein Signal sendet, das einen Anstellwinkel des Drehflüglers (1) angibt, einen Motorleistungssensor (96), der an den Rechner (45) ein Signal sendet, das eine von der Triebwerksanlage (20) verbrauchte Leistung angibt, und einen Motorrechner (960), der an den Rechner (45) ein Signal sendet, das eine verfügbare Leistung angibt.

22. Propeller-Drehflügler (1), wobei der Propeller-Drehflügler (1) eine Triebwerksanlage (20) aufweist, die über ein mechanisches System (30) mit einem Drehflügel (10) und mit mindestens einem Propeller (5, 6) verbunden ist,
**dadurch gekennzeichnet, dass** der Propeller-Drehflügler (1) eine Vorrichtung (40) zur Unterstützung der Steuerung nach einem der Ansprüche 20 bis 21 aufweist.

## Claims

1. Method for assisting in the piloting of a propeller-driven rotorcraft (1), said propeller-driven rotorcraft (1) having a propulsion system (20) connected by a mechanical system (30) to a rotary wing (10) and to least one propeller (5, 6),
said method comprising the following steps:
- displaying, at the request of a computer (45) and on a display (50), a minimum power marker (56) and a maximum power marker (57) on a first scale (55), said first scale (55) being a representation of power consumed by said at least one propeller (5, 6), the minimum power marker (56) being a representation of a minimum power (PMIN) that can be consumed by said at least one propeller (5, 6), the maximum power marker (57) being a representation of a maximum power (PMAX) that can be consumed by said at least one propeller (5, 6)
- displaying, at the request of the computer (45) and on the display (50), a second scale (60) graduated in forward speed of the propeller-driven rotorcraft (1),
- displaying, at the request of the computer (45) and on the display (50), an index (80) comprising a power segment (81) representing a current power (PCUR) consumed by said at least one propeller (5, 6), said index (80) comprising a speed segment (82) indicating a current forward speed (VCUR) on said second scale (60), said index (80) and said first scale (55) being movable relative to each other, said index (80) and said second scale (60) being movable relative to one another
- displaying, on the display (50) and at the request of said computer, a zero-thrust marker (99) carrying a zero forward thrust applied by said at least one propeller (5, 6).

2. Method according to Claim 1,
**characterized in that** the method comprises, at the request of said computer (45), displaying on the display (50) said index (80) with respect to the first scale (55) and displaying on the display (50) the minimum power marker (56) and the maximum power marker (57) with respect to the index (55), as well as adjusting the second scale (60), so that said index (80) indicates the current forward speed (VCUR).

3. Method according to any one of Claims 1 to 2,
**characterized in that** the method comprises using a position sensor (91) to measure a current position of an interface (95) controlling a mean pitch of each blade (500, 600) of said at least one propeller (5, 6), said interface (95) being movable between a first position (POSI) and a second position (POS2) illustrated by ends (EXT1, EXT2) of the first scale (55), said first scale (55) being graduated in positions of said interface (95), said method comprising the following steps:
- using the computer (45) to determine the maximum power (PMAX), the minimum power (PMIN) and the current power (PCUR),
- displaying on the display (50), controlled by the computer (45), said index (80) as a function of said current position (POSCUR),
- displaying on the display (50), controlled by the computer (45), said maximum power marker (57) with respect to the index as a function of a first difference between the current power (PCUR) and the maximum power (PMAX),
- displaying on the display (50), controlled by the computer (45), said minimum power marker (56) with respect to the index (80) as a function of a second difference between the current power (PCUR) and the minimum power (PMIN).

4. Method according to Claim 3,
**characterized in that** said method comprises using said computer (45) to convert said first difference and the second difference into first and second pitch margins, respectively, by means of a pitch law providing a pitch margin based on a power margin and a power gradient (GRD) as a function of the pitch, said method comprising using said computer (45) to convert, by means of a conversion law, said first pitch margin and said second pitch margin into a first distance (DIS1) separating the index (80) from the maximum power marker (57) and a second distance (DIS2) separating the index (80) from the minimum power marker (56).

5. Method according to any one of Claims 1 to 2,
**characterized in that** said method comprises the following steps:
- using the computer (45) to determine the maximum power (PMAX), the minimum power (PMIN) and the current power (PCUR),
- using the computer (45) to position said index (80) and the minimum power marker (56) and the maximum power marker (57) relative to the first scale (55) as a function of the current power (PCUR) and the minimum power (PMIN) and the maximum power (PMAX), said first scale (50) being graduated in power.

6. Method according to any one of Claims 3 to 5,
**characterized in that** said use of the computer (45) for determining of the maximum power (PMAX) comprises the following steps:
- using the computer (45) to determine an available power (PDISPO) that can be delivered by the propulsion system (20), an engine power sensor (96) transmitting an engine power signal carrying the available power (PDISPO) to the computer (45),
- using the computer (45) to determine a rotor power (PROT) consumed by the rotary wing (10), a rotor power sensor (94) transmitting a rotor power signal carrying the rotor power (PROT) to the computer (45),
- using the computer (45) to determine a difference between the available power (PDISPO) and the rotor power (PROT).

7. Method according to Claim 6,
**characterized in that** said use of the computer (45) to determine the maximum power (PMAX) comprises:
- using the computer (45) to determine a limit power of the mechanical system (30), the maximum power (PMAX) being equal to the lesser of the limit power and the difference between the available power (PDISPO) and the rotor power (PROT).

8. Method according to Claim 7,
**characterized in that** said piloting assistance device (40) comprises a propeller speed sensor (932, 934) transmitting a speed signal to the computer (45) carrying a rotational speed of said at least one propeller (5, 6), said limit power being equal to the product of a predetermined torque and said rotational speed.

9. Method according to any one of Claims 1 to 8,
**characterized in that** said minimum power (PMIN) is either a constant or is equal to the product of a predetermined torque and a rotational speed measured by a propeller speed sensor (932, 934) transmitting a speed signal carrying the rotational speed to the computer (45).

10. Method according to any one of Claims 1 to 9,
**characterized in that** said power segment (81) comprises a shape that matches a shape of the minimum power marker (56) and a shape of the maximum power marker (57).

11. Method according to Claim 10,
**characterized in that** said power segment (81) comprises a hollow diamond shape (810), said maximum power marker (57) having two upper faces (571, 572) shaped to match two faces (811, 812) of said diamond (810), and said minimum power marker (56) having two lower faces (561, 562) shaped to match two other faces (813, 814) of said diamond (810).

12. Method according to any one of Claims 1 to 11,
**characterized in that** said speed segment (82) surrounds a value of the current forward speed (VCUR).

13. Method according to any one of Claims 1 to 12,
**characterized in that** said first scale (55) and said second scale (60) are parallel to one another.

14. Method according to any one of Claims 1 to 13,
**characterized in that** said method comprises displaying on the display (50), at the request of the computer (45), with respect to the first scale, a maximum lift marker (87) carrying the maximum lift coefficient (CZMAX) of said at least one propeller and a minimum lift marker (86) carrying the minimum lift coefficient (CZMIN) of said at least one propeller, said index (80) comprising a lift segment (83) having a shape that matches a shape of the minimum lift marker (86) and a shape of the maximum lift marker (87).

15. Method according to Claim 14,
**characterized in that** said second scale (60) separating a first side (COT1) and a second side (COT2), the maximum lift marker (87) and the minimum lift marker (86) are located on the first side (COT1), the maximum power marker (57) and the minimum power marker (56) being located on the first scale of the second side (COT2).

16. Method according to any one of Claims 14 to 15,
**characterized in that** said method comprises using the computer (45) to determine positions of the maximum lift marker and of the minimum lift marker with respect to the first scale as a function of a placement law providing the position of the maximum lift marker (87) within the first scale (55) as a function of the maximum lift coefficient (CZMAX), and the position of the minimum lift marker (86) within the first scale (55) as a function of the minimum lift coefficient (CZMIN).

17. Method according to any one of Claims 14 to 16,
**characterized in that** said method comprises the following steps:
- using said computer (45) to calculate a maximum forward speed (VMAX) for a position of the index on the maximum lift marker (87) or the maximum power marker (57) closest to the index (80), and displaying this maximum forward speed (VMAX) on the display (50),
- using said computer (45) to calculate a minimum forward speed (VMIN) for a position of the index on the minimum lift marker (86) or the minimum power marker (56) closest to the index (80), and displaying this minimum forward speed (VMIN) on the display (50),
- using said computer (45) to adjust the second scale (60) as a function of the current forward speed (VCUR), the minimum forward speed (VMIN) and the maximum forward speed (VMAX).

18. Method according to any one of Claims 1 to 17,
**characterized in that** said zero-thrust marker (99) comprises a shape that matches a shape of the power segment (81).

19. Method according to any one of Claims 1 to 18,
**characterized in that** said zero-thrust marker (99) is in the shape of a diamond that can fit into a hollow diamond (810) of the power segment (81).

20. Device (40) for assisting in the piloting of a propeller-driven rotorcraft (1), said propeller-driven rotorcraft (1) having a propulsion system (20) connected by a mechanical system (30) to a rotary wing (10) and to at least one propeller (5, 6),
the piloting assistance device (40) comprising a computer (45) and a display (50) configured to apply the method according to any one of the preceding claims, said computer (45) being configured to:
- control the display (50) to display a minimum power marker (56) and a maximum power marker (57) on a first scale (55), said first scale representing power consumed by said at least one propeller (5, 6), the minimum power marker (56) representing the minimum power that can be consumed by said at least one propeller (5, 6), and the maximum power marker (57) representing the maximum power that can be consumed by said at least one propeller (5, 6),
- control the display (50) to display a second scale (60) graduated in forward speed of the propeller-driven rotorcraft (1),
- control the display (50) to display an index (80) comprising a power segment (81) representing a current power consumed by said at least one propeller, said index (80) comprising a speed segment (82) indicating a current forward speed (VCUR) on said second scale (60), said index (80) and said first scale (55) being movable relative to one another, said index (80) and said second scale (60) being movable relative to one another,
- control the display (50) to display a zero-thrust marker (99) carrying a zero forward thrust applied by said at least one propeller (5, 6).

21. Device (40) according to Claim 20,
**characterized in that** the piloting assistance device (40) comprises at least one of the following elements: a position sensor (91) emitting a signal carrying a current position (POSCUR) of an interface controlling a mean pitch of blades (500, 600) of said at least one propeller (5, 6), a forward speed sensor (92) emitting a signal to the computer (45) carrying a current forward speed (VCUR) of the rotorcraft, a propeller power sensor (93) emitting a signal to the computer (45) carrying a power consumed by said at least one propeller (5, 6), a rotor power sensor (94) emitting a signal to the computer (45) carrying a power consumed by said rotary wing (10), an angle of attack sensor (97) emitting a signal to the computer (45) carrying an angle of attack of the rotorcraft (1), an engine power sensor (96) emitting a signal to the computer (45) carrying a power consumed by the propulsion system (20), and an engine computer (960) emitting a signal to the computer (45) carrying an available power.

22. Propeller-driven rotorcraft (1), said rotorcraft (1) having a propulsion system (20) connected by a mechanical system (30) to a rotary wing (10) and at least one propeller (5, 6), **characterized in that** said propeller-driven rotorcraft (1) comprises a piloting assistance device (40) according to any one of Claims 20 to 21.
